# EUROPEAN PATENT SPECIFICATION

(11) **EP 4 446 619 B1**
(45) Date of publication and mention of the grant of the patent: **25.03.2026**
(21) Application number: 22907548.6
(22) Date of filing: 16.12.2022
(51) Int. Cl.: F16H 61/04, F16H 61/682, B60W 30/19, F16H 63/50

(54) **DOG-CLUTCH TRANSMISSION**
KLAUENKUPPLUNGSGETRIEBE
TRANSMISSION À EMBRAYAGE À CRABOTS

(30) Priority: 17.12.2021 WO PCT/JP2021/046809
(43) Date of publication of application: 16.10.2024
(73) Proprietor: YAMAHA HATSUDOKI KABUSHIKI KAISHA, Iwata-shi, Shizuoka 438-8501 (JP)
(72) Inventor: MINAMI, Kengo, Iwata-shi, Shizuoka 438-8501 (JP); TAMEMASA, Takuma, Iwata-shi, Shizuoka 438-8501 (JP)
(74) Representative: Stöckeler, Ferdinand
(86) International application number: PCT/JP2022/046517
(87) International publication number: WO 2023/113026

(56) References cited:
- EP-A1- 3 495 698
- JP-A- 2001 263 472
- JP-A- 2007 285 449
- JP-A- 2014 034 380
- JP-A- 2014 034 964
- JP-A- 2014 035 065
- US-A1- 2015 184 745
- US-A1- 2017 082 048
- US-A1- 2019 301 602

## Description

### TECHNICAL FIELD

The present invention relates to a dog clutch-type speed change device.

### BACKGROUND ART

Conventionally, there is a known speed change control device that includes a so-called dog-type transmission and performs a series of speed change actions by an actuator. The series of speed change actions includes disconnecting a clutch, changing a gear position of a transmission, and connecting the clutch. Specifically, there is a known speed change control device that performs the series of speed change actions using an actuator, such as an electric motor.

In the technology of Patent Literature 1, when an upshift operation is performed using a shift pedal without a main clutch being disconnected (without a clutch lever being operated), an output of an engine is restricted to enable switching of speed change gears (speed change action). Further, before a speed change of the speed change gears is completed, the restriction on the engine output is canceled. Specifically, output control is canceled when a driving-side number of rotations or a driven-side number of rotations during the upshift operation meets a predetermined condition.

Patent Literature 2 discloses a technology that performs a downshift by double-clutching control. Specifically, when a speed change order signal is received, a clutch is disconnected and gear release is performed. Specifically, the gear release is started at a position immediately after the clutch has entered a half-clutching region. After the gear release, the clutch is momentarily connected. Thereafter, when a rotation of a dog gear has increased to a rotation at which gear-in is possible, the clutch is disconnected again and the gear-in is executed. The gear-in is started at a position immediately before the clutch has been thrown out. "Immediately before the clutch has been thrown out" is, in other words, immediately before the clutch comes out of the half-clutching region.

### Citation List

### Patent Literature

[Patent Literature 1] Japanese Unexamined Patent Application Publication No. 2015-127508
[Patent Literature 2] Japanese Unexamined Patent Application Publication No. 2001-263472

### SUMMARY OF THE INVENTION

### Technical Problem

The conventional speed change control device disclosed in Patent Literature 1 etc. determines, from the driving-side number of rotations, whether a state where elimination of half-meshing of dogs is expected has arisen. When the conventional speed change control device determines that the state where elimination of half-meshing of the dogs is expected has arisen, the conventional speed change control device cancels the restriction on the output of the engine. Thus, there is a problem in that the time for which the output of the engine is controlled becomes prolonged, and that, moreover, an amount of amplitude of pitching becomes large during the time for which the restriction on the engine output continues. Patent Literature 2 does not disclose a method for eliminating half-meshing when it occurs in the course of a gear-in action in the disclosed speed change control device.

An object of the present invention is to provide a dog clutch-type speed change device that enables a speed change action by which the amount of amplitude of pitching is restricted so as not to become large during a speed change.

### Solution to Problem

The present invention is a dog clutch-type speed change device including: a clutch that is configured to, in a fully connected state, transmit a torque from a motive power source to a main shaft as a clutch friction member is pressed, in a partially connected state, transmit the torque as the clutch friction member is pressed with a pressing force lower than a pressing force in the fully connected state, and in a disconnected state, interrupt the torque transmission from the motive power source to the main shaft; a transmission that is configured to disengage a driving dog and a driven dog by causing the driving dog and the driven dog to be apart from each other and engage the driving dog and the driven dog by causing the driving dog and the driven dog to be closer to each other, and thus switch gears that are configured to transmit a driving force between the main shaft and a drive shaft; a motive power source-torque adjustment device that is configured to adjust the torque of the motive power source; and a control device that is configured to control the motive power source-torque adjustment device during a speed change, wherein the control device is configured to control the motive power source-torque adjustment device based on a state of engagement of the driving dog and the driven dog by: (1) reducing the torque of the motive power source with the clutch in the fully connected state or the partially connected state and the driving dog and the driven dog in an engaged state such that disengagement of the driving dog and the driven dog is promoted; (2) increasing the torque of the motive power source that has decreased from when the driving dog and the driven dog have been disengaged until when the driving dog and the driven dog have started engaging and while the clutch has been in the fully connected state or the partially connected state, such that the torque transmission between the motive power source and the drive shaft is performed when the disengaged driving dog and driven dog are engaged later; and (3) reducing the torque of the motive power source again during a period in which the motive power source is outputting an increased torque and while the clutch is in the fully connected state or the partially connected state, such that when partial engagement of the driving dog and the driven dog occurs during the period in which the motive power source is outputting the increased torque, this partial engagement is dissolved.

In the above-described configuration, the control device may be configured to control the motive power source-torque adjustment device based on the state of engagement of the driving dog and the driven dog by (3) reducing the torque of the motive power source again when the driving dog and the driven dog are in a state of being likely to partially engage or when partial engagement of the driving dog and the driven dog occurs, during the period in which the motive power source is outputting the increased torque and while the clutch is in the fully connected state or the partially connected state, such that when partial engagement of the driving dog and the driven dog occurs during the period in which the motive power source is outputting the increased torque, this partial engagement is dissolved.

In the above-described configuration, the dog clutch-type speed change device may include a dog position detection device that is configured to detect position information on at least one of the driving dog, the driven dog, and a mechanism that is configured to cause the driving dog and the driven dog to be apart from or to be closer to each other. The control device may be configured to control the motive power source-torque adjustment device based on the state of engagement of the driving dog and the driven dog according to the position information detected by the dog position detection device.

In the above-described configuration, the control device may be configured to control the motive power source-torque adjustment device based on the state of engagement of the driving dog and the driven dog by (3) reducing the increased torque of the motive power source again after retaining a torque-increased state of the motive power source with the clutch in the fully connected state or the partially connected state, such that when partial engagement of the driving dog and the driven dog occurs during the period in which the motive power source is outputting the increased torque, this partial engagement is dissolved.

In the above-described configuration, the transmission may include a shift fork that is configured to cause the driving dog and the driven dog to be apart from or to be closer to each other, and a shift drum that is configured to be driven by a shift actuator and to move the shift fork, the shift actuator being controlled by the control device or a shift pedal that is operated by a rider. The control device may be configured to control the motive power source-torque adjustment device based on the state of engagement of the driving dog and the driven dog according to position information on at least one of the driving dog, the driven dog, the shift fork, the shift drum, the shift pedal, and the shift actuator.

In the above-described configuration, the dog clutch-type speed change device may include a clutch connection state detection device that is configured to detect information relating to a connection state of the clutch. The control device may be configured to control the motive power source-torque adjustment device based on the state of engagement of the driving dog and the driven dog according to the information on the connection state of the clutch detected by the clutch connection state detection device.

In the above-described configuration, the dog clutch-type speed change device may include a clutch interlocking mechanism that is configured to be driven by a clutch lever or an electric or fluid-pressure clutch actuator and to change the state of the clutch, the clutch lever being operated by a rider, the clutch actuator being configured to be controlled by the control device. The control device may be configured to control the motive power source-torque adjustment device based on the state of the clutch according to position information on at least one of the clutch lever, the clutch actuator, and the clutch interlocking mechanism and to a fluid pressure.

### Advantageous Effects of the Invention

According to the present invention, partial engagement of the driving dog and the driven dog can be eliminated by (1) reducing the torque of the motive power source so as to promote disengagement of the driving dog and the driven dog; (2) increasing the reduced torque of the motive power source before the disengaged driving dog and driven dog are engaged so as to restrict the amount of amplitude of pitching that has increased due to the reduction in the torque of the motive power source, and (3) reducing the increased torque of the motive power source again when partial engagement of the driving dog and the driven dog occurs. Consequently, the amount of amplitude of pitching can be restricted so as not to increase, and partial engagement of the driving dog and the driven dog can be eliminated.

### BRIEF DESCRIPTION OF THE DRAWINGS

[FIG. 1] FIG. 1 is a view illustrating an overview of a speed change action of a dog clutch-type speed change device according to an embodiment.
[FIG. 2] FIG. 2 is a side view of a motorcycle according to the embodiment.
[FIG. 3] FIG. 3 is a sectional view showing the internal configuration of a power unit.
[FIG. 4] FIG. 4 is a perspective view showing speed change gears constituting parts of a transmission.
[FIG. 5] FIG. 5 is a functional block diagram showing the configuration of a speed change control device.
[FIG. 6] FIG. 6 is an explanatory view illustrating actions of disengaging a driving dog and a driven dog from each other and engaging the driving dog and the driven dog with each other.
[FIG. 7] FIG. 7 is an explanatory view illustrating a state when partial engagement between the driving dog and the driven dog has occurred.
[FIG. 8] FIG. 8 is a flowchart (part 1) showing a procedure of the speed change control device when a speed change command is generated.
[FIG. 9] FIG. 9 is a flowchart (part 2) showing a procedure of the speed change control device when a speed change command is generated.
[FIG. 10] FIG. 10 is a view showing transitions of a clutch command value, an actual clutch position, a required engine torque, a shift cam angle, a rear-wheel driving force, an amount of pitching, an engine speed, a main shaft rotation speed, and a drive shaft rotation speed when a speed change command is generated.
[FIG. 11] FIG. 11 is a view showing the clutch command value, the actual clutch position, the required engine torque, the shift cam angle, the rear-wheel driving force, the engine speed, the main shaft rotation speed, and the drive shaft rotation speed when a speed change command is generated in the related art.
[FIG. 12] FIG. 12 is a sectional view showing the internal configuration of a power unit including a clutch interlocking mechanism.

### MODES FOR CARRYING OUT THE INVENTION

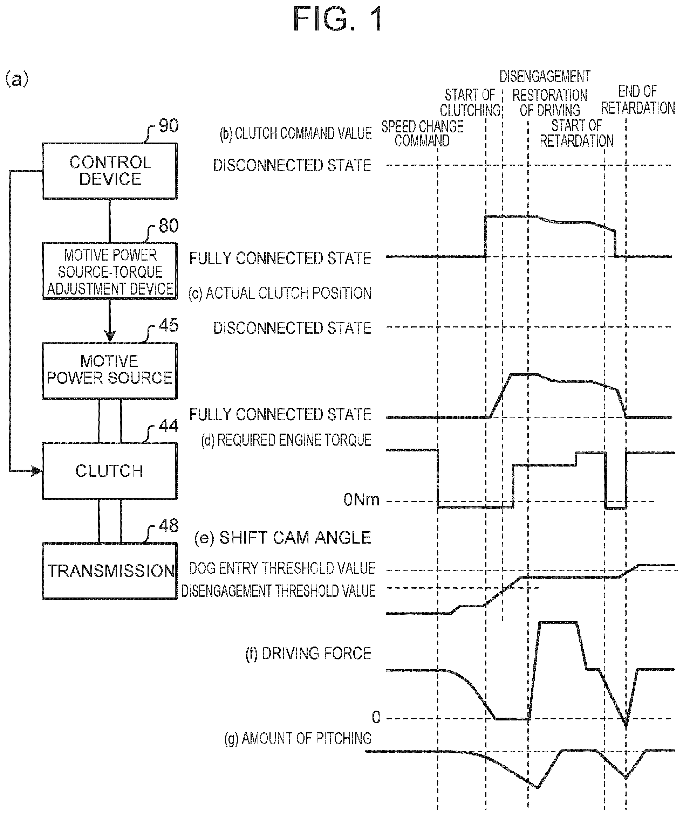

An embodiment of the present invention will be described below with reference to the drawings. FIG. 1 is a view illustrating an overview of a speed change action of a dog clutch-type speed change device according to the embodiment. As shown in FIG. 1 (a), the dog clutch-type speed change device has a clutch 44, a motive power source 45, a transmission 48, a motive power source-torque adjustment device 80, and a control device 90.

A vehicle including the dog clutch-type speed change device travels on motive power of the motive power source 45. For example, the motive power source 45 is an internal combustion engine that uses gasoline as fuel. However, the type of the motive power source 45 is not particularly limited. The motive power source 45 may be a motor or the like other than an internal combustion engine such as a gasoline engine. The motive power source 45 may be composed of a combination of a gasoline engine and a motor.

The dog clutch-type speed change device is configured to switch gears with different speed reduction ratios by the transmission 48. The transmission 48 is configured to switch gears that transmit a torque between a main shaft and a drive shaft. The main shaft rotates by receiving a torque from the motive power source 45 through the clutch 44. The drive shaft applies a driving torque to the vehicle. The clutch 44 is configured to transmit and interrupt the torque between the motive power source 45 and the main shaft. Connection states of the clutch 44 include a fully connected state, a partially connected state, and a disconnected state. When the clutch 44 is in the fully connected state, the torque is transmitted from the motive power source 45 to the main shaft as clutch friction members are pressed. When the clutch 44 is in the partially connected state, the torque is transmitted from the motive power source 45 to the main shaft as the clutch friction members are pressed with a pressing force that is lower than a pressing force when the clutch 44 is in the fully connected state. When the clutch 44 is in the disconnected state, the torque transmission from the motive power source 45 to the main shaft is interrupted.

When a speed change is performed, the motive power source-torque adjustment device 80 is configured to adjust the torque of the motive power source 45. When a speed change is performed, the control device 90 is configured to perform control of the connection state of the clutch 44. Further, the control device 90 is configured to perform control of the torque of the motive power source 45 through the motive power source-torque adjustment device 80.

Next, actions when the dog clutch-type speed change device performs a speed change will be described. When the control device 90 receives a speed change command, the control device 90 controls the motive power source-torque adjustment device 80 so as to reduce the torque of the engine 45 (FIG. 1 (d)). Meanwhile, a command value for the clutch does not immediately switch from the fully connected state to the partially connected state (FIG. 1 (b)). Thus, as a driving force for a rear wheel becomes gradually lower, an amount of amplitude of pitching becomes gradually larger. Thereafter, when a predetermined time elapses, the control device 90 switches the command value for the clutch 44 from the fully connected state to the partially connected state (start of clutching). The control device 90 disengages a driving dog and a driven dog. After the driving dog and the driven dog are disengaged and until the driving dog and the driven dog start engaging, the control device 90 controls the motive power source-torque adjustment device 80 with the clutch 44 in the partially connected state. Thus, the control device 90 increases the reduced engine torque. In that state, a dog engaging action is started. The dog engaging action is an action in which the disengaged driving dog and driven dog engage. When the dog engaging action starts, the torque is transmitted between the engine and the drive shaft. As a result, the driving force for the rear wheel increases and the amount of amplitude of pitching becomes smaller. Then, the control device 90 controls the motive power source-torque adjustment device 80 such that when a state of partial engagement of the driving dog and the driven dog occurs during the dog engaging action with the clutch in the partially connected state and the engine torque in an increased state, this state of partial engagement of the dogs is dissolved. The control device 90 reduces the engine torque again. When the engine torque is reduced, the driving force for the rear wheel becomes lower. As a result, the amount of amplitude of pitching becomes larger. However, when the state of partial engagement of the driving dog and the driven dog is dissolved, the control device 90 controls the motive power source-torque adjustment device 80 so as to increase the engine torque again. Therefore, the amount of amplitude of pitching can be restricted so as not to increase.

In this way, when a speed change command is generated, the control device 90 controls the motive power source-torque adjustment device 80 according to the status of engagement of the driving dog and the driven dog. Thus, the amount of amplitude of pitching can be restricted so as not to increase, and partial engagement of the driving dog and the driven dog can be eliminated. In the above-described embodiment, the case has been described where the clutch 44 is in the partially connected state when a speed change command is generated. However, the clutch 44 may be in the fully connected state. In the above-described embodiment, the case has been described where the clutch 44 is in the partially connected state after the driving dog and the driven dog are disengaged until the driving dog and the driven dog are engaged. However, the clutch 44 may be in the fully connected state. In the above-described embodiment, the case has been described where the engine torque is reduced while the engine torque increases continuously and the clutch 44 is in the partially connected state to thereby dissolve the state of partial engagement of the driving dog and the driven dog. However, the clutch 44 may be in the fully connected state.

Next, a vehicle equipped with the dog clutch-type speed change device will be specifically described. Vehicles include, other than so-called four-wheel automobiles, snowmobiles, all-terrain vehicles (ATVs), and saddle-riding type automobiles such as motorcycles. The type of vehicle is not particularly limited as long as the above-described speed change action is performed. In the following, the description will be continued by taking as an example a case where the vehicle is a motorcycle.

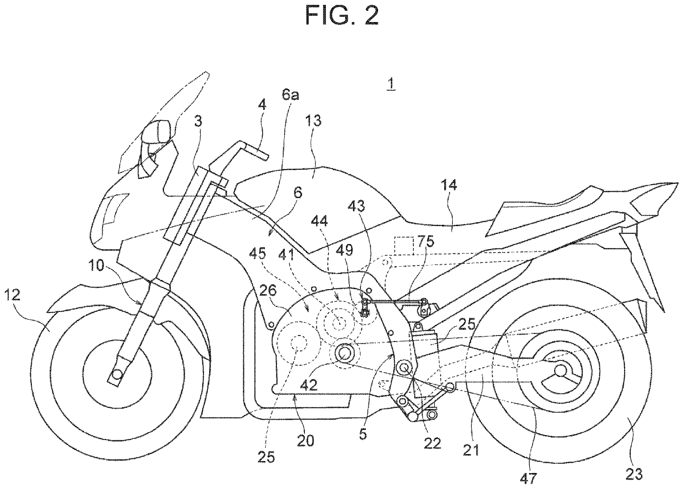

FIG. 2 is a side view showing a motorcycle 1. As shown in FIG. 2, the motorcycle 1 includes a head pipe 3 and a vehicle body frame 6. The vehicle body frame 6 has two frame parts 6a that are a left-right pair and extend rearward from the head pipe 3. In FIG. 2, only one of the frame parts 6a is shown. A rear portion of the frame part 6a extends downward and connects to a rear arm bracket 5. On the rear arm bracket 5, a front end portion of a rear arm 21 is supported through a pivot shaft 22 so as to be able to swing up and down. At a rear end portion of the rear arm 21, a rear wheel 23 is supported.

A front fork 10 is pivotably supported on the head pipe 3. At an upper end of the front fork 10, a steering handlebar 4 is provided. At a lower end of the front fork 10, a front wheel 12 is rotatably provided. On upper portions of the frame parts 6a, a fuel tank 13 is disposed. At a rear side of the fuel tank 13, a seat 14 is disposed.

A power unit 20 is suspended on the frame parts 6a and the rear arm bracket 5. The power unit 20 has at least the motive power source 45 (hereinafter referred to as an "engine 45"), the clutch 44, and the shift mechanism 43. The engine 45, the clutch 44, and the shift mechanism 43 are integrally incorporated in a crank case 26.

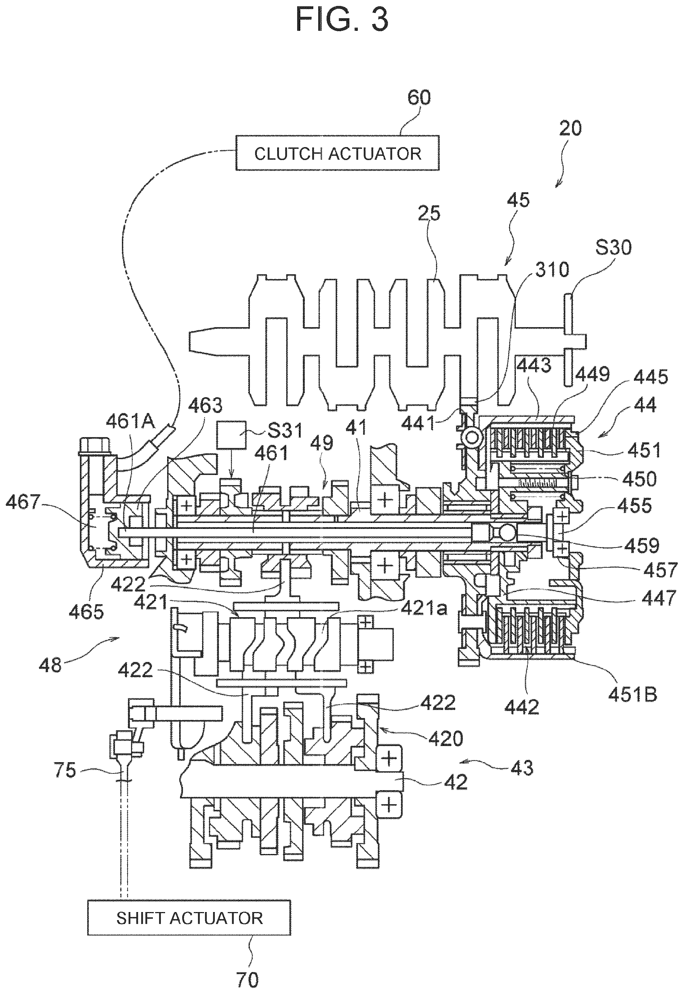

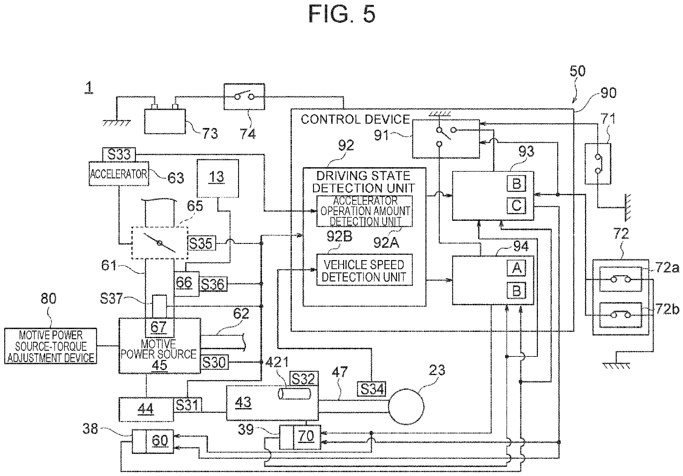

Next, the internal configuration of the power unit 20 will be described. FIG. 3 is a sectional view showing the internal configuration of the power unit 20. As shown in FIG. 3, the power unit 20 has the engine 45, the clutch 44, and the shift mechanism 43. The main shaft 41 is arranged parallel to the crankshaft 25. The drive shaft 42 is arranged parallel to the main shaft 41. The dog clutch-type speed change device 50 according to this embodiment includes the clutch 44, the shift mechanism 43, the clutch actuator 60, and the shift actuator 70 (see FIG. 5). As the clutch actuator 60 drives, the clutch 44 can be connected and disconnected. As the shift actuator 70 drives, switching of speed change gears of the shift mechanism 43 can be performed. That is, a change of a gear position of the shift mechanism 43 can be performed. The dog clutch-type speed change device 50 according to this embodiment includes the motive power source-torque adjustment device 80 (see FIG. 5). The motive power source-torque adjustment device 80 adjusts the torque of the engine 45 when a speed change is performed. Further, the dog clutch-type speed change device 50 includes the control device 90. The control device 90 executes control of the driving of the clutch actuator 60 and the shift actuator 70 as well as control of the motive power source-torque adjustment device 80.

The dog clutch-type speed change device 50 need not include separate actuators as the clutch actuator 60 and the shift actuator 70. That is, the dog clutch-type speed change device 50 may include an actuator that performs connection and disconnection of the clutch 44 as well as switching of the speed change gears of the shift mechanism 43. In this case, this actuator has the function of connecting and disconnecting the clutch 44 and the function of switching the speed change gears of the shift mechanism 43.

In the fully connected state, the clutch 44 according to this embodiment transmits the torque without slippage from the engine 45 to the main shaft 41 as the clutch friction members are pressed. In the partially connected state, the clutch 44 transmits the torque as the clutch friction members are pressed with a pressing force that is lower than a pressing force in the fully connected state. In the disconnected state, the clutch 44 interrupts the torque transmission from the engine 45 to the main shaft 41. The clutch friction members include at least either a driving-side clutch friction member (e.g., a friction disc or the like) or a driven-side clutch friction member (e.g., a clutch disc) or the like. The driving-side clutch friction member rotates integrally with a primary gear on a driven side of the clutch 44. The driven-side clutch friction member integrally rotates with the main shaft 41. In the fully connected state of the clutch 44, the driving-side clutch friction member and the driven-side clutch friction member are pressed against each other by a clutch spring (not shown). The driving-side clutch friction member and the driven-side clutch friction member rotate integrally by a friction force occurring between the driving-side clutch friction member and the driven-side clutch friction member.

The torque of the engine 45 is transmitted from the driving-side clutch friction member to the main shaft 41 through the driven-side clutch friction member. In the disconnected state of the clutch 44, the driving-side clutch friction member and the driven-side clutch friction member are separated from each other against an elastic force of the clutch spring. Thus, pressing between the driving-side clutch friction member and the driven-side clutch friction member is eliminated. Then, the driven-side clutch friction member rotates idly relative to the driving-side clutch friction member, so that the torque transmission is interrupted. In the partially connected state of the clutch 44, the driving-side clutch friction member presses the driven-side clutch friction member with a pressing force lower than the pressing force in the fully connected state, and thereby the torque is transmitted. When the clutch actuator 60 shifts the clutch 44 toward the disconnection side, the clutch actuator 60 separates the driving-side friction member and the driven-side friction member from each other against the elastic force of the clutch spring. Thus, the clutch actuator 60 reduces the pressing force that has been acting between the driving-side friction member and the driven-side friction member. Generally, in a friction clutch, a driving-side friction member and a driven-side friction member are pressed with a pressing force according to a clutch position. A torque according to this pressing force is transmitted through the friction clutch. Thus, the clutch position and the torque transmitted through the friction clutch are correlated with each other.

The clutch 44 is, for example, a multi-disc friction clutch. The clutch 44 includes a clutch housing 443 and a clutch boss 447. On an inner side of the clutch housing 443, a plurality of friction plates 445 each functioning as the driving-side clutch friction member is provided. On an outer side of the clutch boss 447, a plurality of clutch plates 449 each functioning as the driven-side clutch friction member is provided. Each friction plate 445 is fixed on the clutch housing 443 with respect to a rotation direction of the main shaft 41. Therefore, the plurality of friction plates 445 rotates along with the clutch housing 443. Each friction plate 445 can change its position with respect to an axial direction of the main shaft 41.

The plurality of friction plates 445 is arrayed in the axial direction of the main shaft 41. Each clutch plate 449 faces each of adjacent friction plates 445. Each clutch plate 449 is fixed on the clutch boss 447 with respect to the rotation direction of the main shaft 41. Thus, the plurality of clutch plates 449 rotates along with the clutch boss 447. Each clutch plate 449 can change its position with respect to the axial direction of the main shaft 41.

In this embodiment, the plurality of friction plates 445 and the plurality of clutch plates 449 constitute a plate group 442.

As shown in FIG. 3, a pressure plate 451 is disposed outward of the main shaft 41 (on the right side in FIG. 3). The pressure plate 451 is formed in a substantially disc-like shape. At a radially outer-side part of the pressure plate 451, a pressing part 451B protruding toward the plate group 422 is formed. The pressing part 451B faces the friction plate 445 that is located farthest on the right side in the plate group 442.

The clutch 44 is provided with a spring 450. The spring 450 urges the pressure plate 451 inward (toward the left side in FIG. 3). That is, the spring 450 urges the pressure plate 451 in the direction in which the pressing part 451B presses the plate group 442.

A center part of the pressure plate 451 is engaged with one end portion of a push rod 455 (on the right side in FIG. 3) through a bearing 457. Thus, the pressure plate 451 is rotatable relative to the push rod 455. The main shaft 41 has a cylindrical shape. The other end portion (left end portion) of the push rod 455 is housed inside the main shaft 41. Inside the main shaft 41, a spherical ball 459 is provided. The ball 459 is adjacent to the other end portion (left end portion) of the push rod 455. Further, inside the main shaft 41, a push rod 461 adjacent to the ball 459 is provided.

One end portion (left end portion) 461A of the push rod 461 protrudes from the main shaft 41. At the one end portion 461A of the push rod 461, a piston 463 is integrally provided. The piston 463 is guided by a cylinder main body 465. The piston 463 is slidable in the axial direction of the main shaft 41.

When the clutch actuator 60 drives, a hydraulic fluid as a compressed fluid is supplied to a space 467. The space 467 is surrounded by the piston 463 and the cylinder main body 465. When the hydraulic fluid is supplied to the space 467, the piston 463 is pushed and moves in the rightward direction in FIG. 3. Thus, the piston 463 pushes the pressure plate 451 in the rightward direction in FIG. 3 through the push rod 461, the ball 459, the push rod 455, and the bearing 457. When the pressure plate 451 is pushed in the rightward direction in FIG. 3, the pressing part 451B of the pressure plate 451 separates from the friction plate 445. As a result, the clutch 44 assumes the disconnected state.

When connecting the clutch 44, the pressure plate 451 moves toward the left side in FIG. 3 by the spring 450. When the pressure plate 451 moves toward the left side in FIG. 3, the pressing part 451B presses the plate group 442 in the leftward direction. As a result, the friction plates 445 and the clutch plates 449 of the plate group 442 are brought into pressure-contact with each other. Thus, the clutch 44 assumes the fully connected state.

On the other hand, in the disconnected state of the clutch 44, the pressure plate 451 moves toward the right side in FIG. 3 by the push rod 455. Then, the pressing part 451B of the pressure plate 451 separates from the plate group 442. In the state where the pressing part 451B is separated from the plate group 442, each friction plate 445 and each clutch plate 449 are not in pressure-contact with each other. That is, there is a small gap formed between each friction plate 445 and each clutch plate 449. Therefore, a friction force that can transmit the driving force does not occur between each friction plate 445 and each clutch plate 449.

In this way, the pressure plate 451 moves in one direction or the other direction along the axial direction of the main shaft 41 according to which of the driving force of the clutch actuator 60 and the urging force of the spring 450 is larger. In accordance with this movement, the state of the clutch 44 transitions between the fully connected state and the disconnected state. Hereinafter, unless otherwise defined, the fully connected state represents a state where the torque is transmitted without slippage from the engine 45 to the main shaft 41 as the clutch friction members are pressed. The partially connected state represents a state where the torque is transmitted as the clutch friction members are pressed with a pressing force lower than the pressing force in the fully connected state. The disconnected state represents a state where the torque transmission from the engine 45 to the main shaft 41 is interrupted.

A gear 310 is integrally supported on the crankshaft 25 of the engine 45. On the main shaft 41, a gear 441 that meshes with the gear 310 is supported. The gear 441 is rotatable relative to the main shaft 41. The gear 441 is integrally provided on, for example, the clutch housing 443. Thus, the torque of the engine 45 is transmitted from the crankshaft 25 to the clutch housing 443 through the gear 441. Further, the torque of the engine 45 is transmitted from the clutch housing 443 to the clutch boss 447 by the friction force occurring between the plurality of friction plates 445 and the plurality of clutch plates 449. The clutch boss 447 and the main shaft 41 rotate integrally. That is, the clutch boss 447 does not rotate relative to the main shaft 41. Therefore, when the clutch 44 is connected, the torque of the engine 45 is transmitted to the main shaft 41.

The push rod 455 is not limited to the one that pushes the pressure plate 451 toward the right side in FIG. 3 by a mechanism inserted inside the main shaft 41. The push rod 455 may be one that pulls the pressure plate 451 toward the right side in FIG. 3 by a mechanism provided outside the pressure plate 451 (on the right side in FIG. 3).

The clutch 44 may be a single-disc clutch instead of a multi-disc clutch. The clutch 44 may include a centrifugal weight. In this case, the clutch 44 is connected and disconnected based on the driving of the clutch actuator 60 and a centrifugal force of the centrifugal weight. The clutch may be a hydraulic type. The connection and disconnection of the clutch are controlled through a hydraulic pressure, and specifically, the clutch pressing force can be controlled through a hydraulic pressure generated by a clutch actuator using a hydraulic solenoid. Thus, the friction force occurring between the plurality of friction plates 445 and the plurality of clutch plates 449 constituting parts of the clutch can be controlled through a hydraulic pressure.

Subsequently, the detailed configuration of the shift mechanism 43 will be described. The shift mechanism 43 according to this embodiment is a so-called dog-type shift mechanism.

In the power unit 20, an engine speed sensor S30 is provided on the crankshaft 25. The engine speed sensor S30 detects a rotation speed of the crankshaft 25. The crankshaft 25 is coupled to the main shaft 41 through the clutch 44. A main shaft rotation speed sensor S31 is provided on the main shaft 41. The main shaft rotation speed sensor S31 detects a rotation speed of the main shaft 41.

On the main shaft 41, multi-stage speed change gears 49 are mounted. On the other hand, on the drive shaft 42, a plurality of speed change gears 420 is mounted. The plurality of speed change gears 420 respectively corresponds to the multi-stage speed change gears 49. Of the multi-stage speed change gears 49 and the plurality of speed change gears 420, only one selected pair of gears mesh with each other. At least either the speed change gears 49 other than the selected speed change gear 49 among the multi-stage speed change gears 49 or the speed change gears 420 other than the selected speed change gear 420 among the plurality of speed change gears 420 are rotatable relative to the main shaft 41 or the drive shaft 42. That is, at least either the speed change gears 49 that are not selected or the speed change gears 420 that are not selected rotate idly relative to the main shaft 41 or the drive shaft 42. Thus, transmission of rotation between the main shaft 41 and the drive shaft 42 is performed through only the selected speed change gear 49 and the selected speed change gear 420 that mesh with each other.

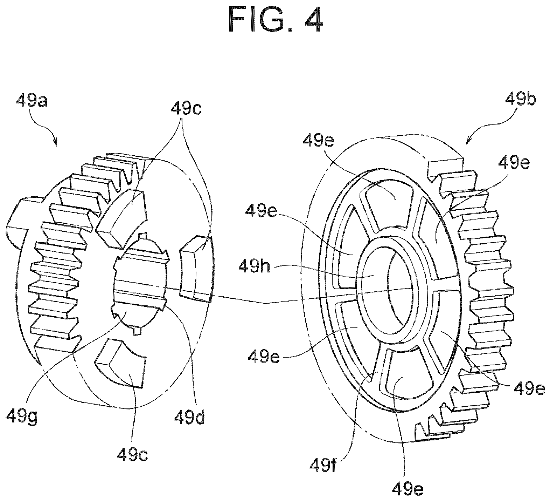

The specific configuration of the speed change gears 49 will be described using FIG. 4. FIG. 4 shows the configuration of the speed change gears 49. However, the configuration of the speed change gears 420 is similar and therefore description thereof will be omitted.

As the speed change gears 49, a first gear 49a and a second gear 49b are included. In the first gear 49a, engaging protrusions 49c are formed as a driving dog on an axial end surface. In the second gear 49b, engaging recesses 49e are formed as a driven dog in an axial end surface facing the engaging protrusions 49c. The shift mechanism 43 includes pluralities of first gears 49a and second gears 49b. The first gear 49a is disposed between one pair of second gears 49b. In the first gear 49a, three engaging protrusions 49c are formed. These engaging protrusions 49c are disposed evenly in a circumferential direction at an outer edge portion of the axial end surface of the first gear 49a. In the second gear 49b, six engaging recesses 49e are formed. These engaging recesses 49e are also evenly disposed in a circumferential direction.

At an axial center part of the first gear 49a, an insertion hole 49g through which the main shaft 41 and the drive shaft 42 are inserted is formed. A plurality of grooves 49d is formed in a circumferential surface of the insertion hole 49g. The first gear 49a is spline-fitted on the main shaft 41 and the drive shaft 42. On the other hand, an insertion hole 49h through which the main shaft 41 and the drive shaft 42 are inserted is formed in the second gear 49b. However, no groove is formed in this insertion hole 49h. Thus, the second gear 49b is mounted on the main shaft 41 and the drive shaft 42 in an idly rotatable state.

As a shift drum (hereinafter referred to as a "shift cam") 421 (see FIG. 3) rotates, a shift fork 422 moves along a cam groove 421a. In conjunction with the movement of the shift fork 422, the first gear 49a moves in the axial direction along splines of the main shaft 41 and the drive shaft 42. Then, the engaging protrusions 49c of the first gear 49a engage in the engaging recesses 49e of the second gear 49b. Thereby, the combination of the speed change gears 49, 420 that transmit the driving force from the main shaft 41 to the drive shaft 42 is switched, and thus a gear change is performed. The transmission 48 is formed by these speed change gears 49, 420 and the shift cam 421.

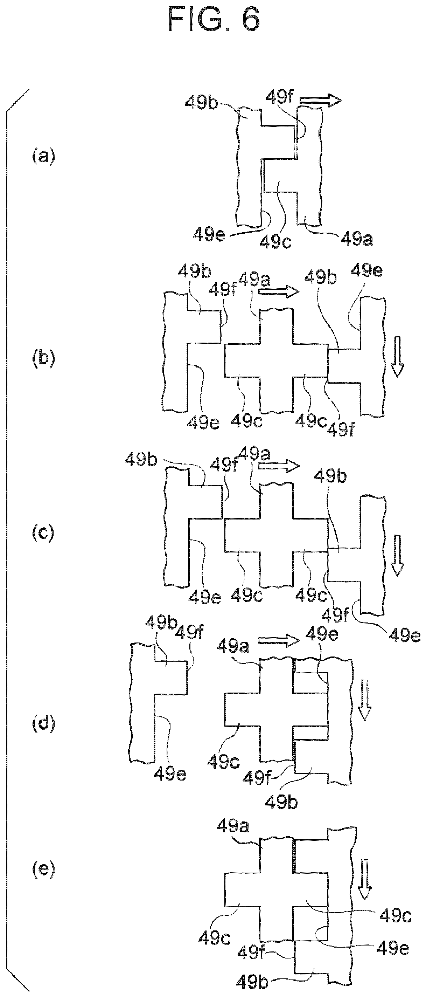

Next, disengagement and engagement during switching of the gears in the speed change gears 49 will be described. FIG. 6 is an explanatory view illustrating actions of disengaging the driving dog and the driven dog from each other and engaging the driving dog and the driven dog with each other.

As shown in FIG. 6 (a), when the first gear 49a and the second gear 49b are engaged, the engaging protrusions 49c are in contact with inner surfaces of the engaging recesses 49e of the second gear 49b in a state where the engaging protrusions 49c have entered deep inside the engaging recesses 49e. In this case, the driving force is transmitted from the main shaft 41 to the drive shaft 42. When performing a gear change from this state, the shift cam 421 (see FIG. 3) rotates. When the first gear 49a is thereby moved in the rightward direction in FIG. 6 (a), the engaging protrusions 49c of the first gear 49a come out of the engaging recesses 49e of the second gear 49b as shown in FIG. 6 (b). This is called disengagement. When the first gear 49a moves further in the rightward direction in FIG. 6 (a), the engaging protrusions 49c of the first gear 49a come into contact with an axial end surface 49f of another second gear 49b disposed adjacently. This is called dog contact.

As shown in FIG. 6 (b), the second gear 49b is rotating relative to the first gear 49a. Therefore, when the engaging protrusions 49c of the first gear 49a are no longer in contact with the axial end surface 49f of the second gear 49b as shown in FIG. 6 (c), the engaging protrusions 49c of the first gear 49a enter the engaging recesses 49e of the second gear 49b as shown in FIG. 6 (d). This is called engagement. When the second gear 49b rotates further relative to the first gear 49a, the engaging protrusions 49c of the first gear 49a come into contact with the inner surfaces of the engaging recesses 49e of the second gear 49b as shown in FIG. 6 (e). Thus, the first gear 49a engages with another second gear 49b. The driving force is transmitted from the main shaft 41 to the drive shaft 42.

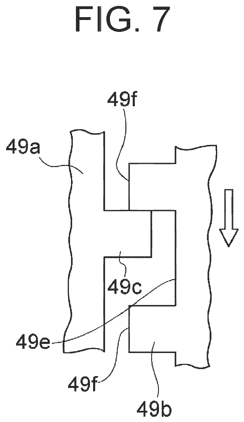

The first gear 49a moves in the axial direction as the shift cam 421 (see FIG. 3) rotates. In this case, the engaging protrusions 49c of the first gear 49a may come into contact with the inner surfaces of the engaging recesses 49e of the second gear 49b in a state of not having completely entered the engaging recesses 49e of the second gear 49b as shown in FIG. 7. This state is called half-meshing of dogs. In this case, the torque of the engine 45 is reduced and an adhesive force (load) between the engaging protrusions 49c of the first gear 49a and the engaging recesses 49e of the second gear 49b is removed. Otherwise, the engaging protrusions 49c of the first gear 49a cannot be made to enter deep inside the engaging recesses 49e of the second gear 49b.

Selection of the speed change gear 49 or the speed change gear 420 is performed by the shift cam 421. A plurality of cam grooves 421a is formed in an outer circumferential surface of the shift cam 421. One shift fork 422 is mounted in each cam groove 421a. Each shift fork 422 is engaged with predetermined speed change gear 49 and speed change gear 420 of the main shaft 41 and the drive shaft 42, respectively. As the shift cam 421 rotates, each of the plurality of shift forks 422 is guided by the cam groove 421a so as to move in the axial direction of the main shaft 41. Thus, gears that mesh with each other among the speed change gears 49 and the speed change gears 420 are selected. Specifically, among the pluralities of speed change gears 49 and speed change gears 420, only one pair of gears at a position corresponding to a rotation angle of the shift cam 421 enters a state of being fixed on the main shaft 41 and the drive shaft 42, respectively, by the splines. Thus, the gear position in the shift mechanism 43 is determined. As a result, transmission of rotation is performed at a predetermined gear ratio between the main shaft 41 and the drive shaft 42 through the speed change gear 49 and the speed change gear 420.

The shift cam 421 rotates by a predetermined angle as a shift rod 75 moves reciprocatingly. The shift rod 75 moves reciprocatingly as the shift actuator 70 drives.

By the configuration as has been described above, the predetermined pair of speed change gear 49 and speed change gear 420 are fixed on the main shaft 41 and the drive shaft 42, respectively. In this state, when the clutch 44 is put in the fully connected state and the engine 45 is driven, the torque of the engine 45 is transmitted to the main shaft 41 through the clutch 44. Transmission of rotation is performed at a predetermined gear ratio between the main shaft 41 and the drive shaft 42 through the predetermined pair of speed change gear 49 and speed change gear 420. Then, the drive shaft 42 rotates. When the drive shaft 42 rotates, the torque is transmitted by a power transmission mechanism 47 (see FIG. 2) that connects the drive shaft 42 and the rear wheel 23 (see FIG. 2) to each other, and the rear wheel 23 rotates.

Next, the dog clutch-type speed change device 50 according to this embodiment will be described. FIG. 5 is a control block diagram of the dog clutch-type speed change device 50. As shown in FIG. 5, the dog clutch-type speed change device 50 includes the shift mechanism 43, the clutch 44, the clutch actuator 60, the shift actuator 70, and the control device (electric control unit) 90. The control device 90 has a switching determination unit 91, a driving state detection unit 92, a semi-automatic control unit 93, and a fully automatic control unit 94. While the embodiment in which the control device 90 is composed of one unit has been described, the control device 90 may be composed of one unit or may be composed of a plurality of units.

The motorcycle 1 includes a power source device 73 and a main switch 74. When the main switch 74 is operated by an occupant of the motorcycle 1, the power source device 73 and the control device 90 become electrically continuous with each other. Then, the control device 90 becomes operable. In this regard, the motorcycle 1 may include a relay switch or the like (not shown). In this case, part of the control device 90 can operate also when the main switch 74 is not operated.

As described above, in the power unit 20 (see FIG. 3), the engine speed sensor S30 is provided on the crankshaft 25 (see FIG. 3). In FIG. 5, the engine speed sensor S30 is adjacent to the engine 45. On the main shaft 41 (see FIG. 3), the main shaft rotation speed sensor S31 is provided. In FIG. 5, the main shaft rotation speed sensor S31 is adjacent to the clutch 44.

The motorcycle 1 includes an intake pipe 61, an exhaust pipe 62, an accelerator 63, a throttle valve 65, a fuel supply device 66, and an ignition device 67. The intake pipe 61 connects to the engine 45. The exhaust pipe 62 connects to the engine 45 at a position different from a position at which the intake pipe 61 connects thereto. The throttle valve 65 is provided inside the intake pipe 61. The throttle valve 65 adjusts an amount and a speed of air flowing through the intake pipe 61. The fuel supply device 66 is provided at an intermediate point in the intake pipe 61. The fuel supply device 66 may be a so-called carburetor. The fuel supply device 66 may be a fuel injection device. The fuel supply device 66 supplies fuel stored in the fuel tank 13 to the inside of the intake pipe 61. Further, the ignition device 67 is provided inside the engine 45. In this embodiment, an ignition timing of the ignition device 67 is electronically controlled. However, the ignition timing of the ignition device 67 may be mechanically controlled.

An opening degree of the throttle valve 65 changes based on an amount of pressing on the accelerator 63. As the opening degree of the throttle valve 65 changes, the amount of air passing through the intake pipe 61 changes. However, the opening degree of the throttle valve 65 may be electronically controlled.

The motorcycle 1 includes an accelerator operation amount sensor S33, a throttle position sensor S35, a fuel supply amount sensor S36, an ignition timing sensor S37, a shift position sensor S32, and a vehicle speed sensor S34. The accelerator operation amount sensor S33 detects the amount of pressing on the accelerator 63 as an operation amount. The throttle position sensor S35 detects the opening degree of the throttle valve 65. The fuel supply amount sensor S36 detects a fuel supply amount in the fuel supply device 66. The ignition timing sensor S37 detects a timing of igniting an air-fuel mixture in the ignition device 67. The shift position sensor S32 detects the gear position of the shift mechanism 43 by detecting the rotation angle of the shift cam 421 (see FIG. 3). The vehicle speed sensor S34 detects a vehicle speed of the motorcycle 1. These sensors may detect the respective amounts of shift directly or indirectly. These sensors may have an arithmetic operation function and calculate required physical amounts from predetermined physical amounts.

Further, the dog clutch-type speed change device 50 includes a potentiometer 38 and a potentiometer 39 that detects a driving amount of the shift actuator 70. The potentiometer 38 detects a driving amount of the clutch actuator 60. The potentiometer 39 detects the driving amount of the shift actuator 70. Particularly, the potentiometer 38 detects a rotation angle of the clutch actuator 60. The potentiometer 39 detects a rotation angle of the shift actuator 70. However, in the case where the dog clutch-type speed change device 50 includes an actuator that has both the function as the clutch actuator 60 and the function as the shift actuator 70 as described above, the dog clutch-type speed change device 50 need not include the two potentiometers (the potentiometer 38 and the potentiometer 39).

The driving state detection unit 92 of the control device 90 detects a driving state of the motorcycle 1 by detection values of the above-described sensors. That is, the driving state detection unit 92 receives an input of a signal based on the operation amount of the accelerator 63 from the accelerator operation amount sensor S33. The driving state detection unit 92 thereby detects the operation amount of the accelerator 63.

The driving state detection unit 92 receives an input of a signal based on the opening degree of the throttle valve 65 from the throttle position sensor S35. The driving state detection unit 92 thereby detects the opening degree of the throttle valve 65. The driving state detection unit 92 acquires a signal based on the fuel supply amount of the fuel supply device 66 from the fuel supply amount sensor S36. The driving state detection unit 92 thereby detects the fuel supply amount in the fuel supply device 66. The driving state detection unit 92 acquires a signal based on the ignition timing of the ignition device 67 from the ignition timing sensor S37. The driving state detection unit 92 thereby detects the ignition timing of the ignition device 67. The driving state detection unit 92 acquires a signal based on the rotation speed of the crankshaft 25 from the engine speed sensor S30. The driving state detection unit 92 thereby detects the rotation speed of the crankshaft 25. The driving state detection unit 92 acquires a signal based on the rotation speed of the main shaft 41 from the main shaft rotation speed sensor S31. The driving state detection unit 92 thereby detects the rotation speed of the main shaft 41. The driving state detection unit 92 acquires a signal based on the rotation angle of the shift cam 421 from the shift position sensor S32. The driving state detection unit 92 thereby detects the current gear position in the shift mechanism 43. The driving state detection unit 92 acquires a signal based on the vehicle speed of the motorcycle 1 from the vehicle speed sensor S34. The driving state detection unit 92 thereby detects the vehicle speed of the motorcycle 1.

In the dog clutch-type speed change device 50, the speed change action is performed as the clutch actuator 60 and the shift actuator 70, or only the shift actuator 70 drives. The speed change action of the dog clutch-type speed change device 50 is a series of actions consisting of disconnecting the clutch 44, changing the gear position of the shift mechanism 43, and connecting the clutch 44.

In the dog clutch-type speed change device 50, a rider of the motorcycle 1 orders the above-described speed change action to start. The dog clutch-type speed change device 50 can execute control in which the series of speed change actions is automatically performed. This control is control in which the driving of the clutch actuator 60 and the shift actuator 70 is started according to operation of a shift switch 72 (see FIG. 5 etc.) by the rider of the motorcycle 1. This control will be referred to as semi-automatic control Sc. The dog clutch-type speed change device 50 can execute control in which the series of speed change actions is automatically performed according to the driving state of the motorcycle 1, regardless of the intention of the rider of the motorcycle 1. This control is control in which the driving of the clutch actuator 60 and the shift actuator 70 is started according to detection of the driving state by the driving state detection device. This control will be referred to as fully automatic control Fc.

The dog clutch-type speed change device 50 according to this embodiment is configured to be able to switch between the semi-automatic control Sc and the fully automatic control Fc. Specifically, the control device 90 has the semi-automatic control unit 93 and the fully automatic control unit 94. The semi-automatic control unit 93 executes the semi-automatic control Sc. The fully automatic control unit 94 executes the fully automatic control Fc.

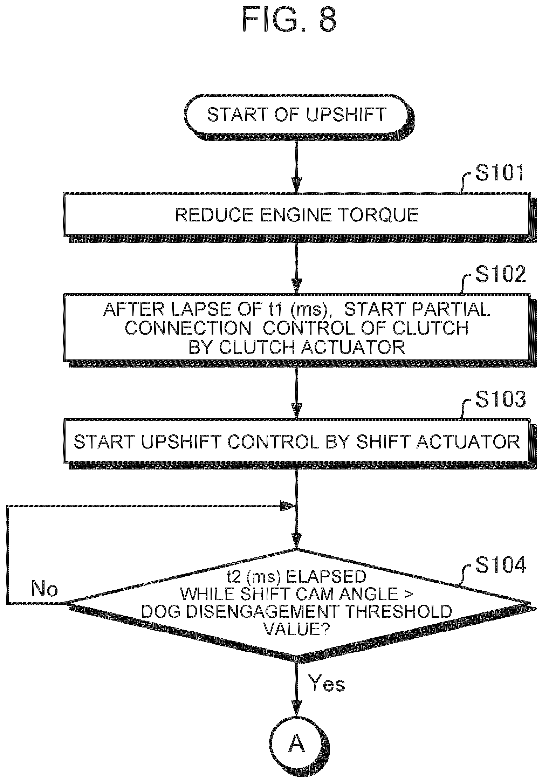

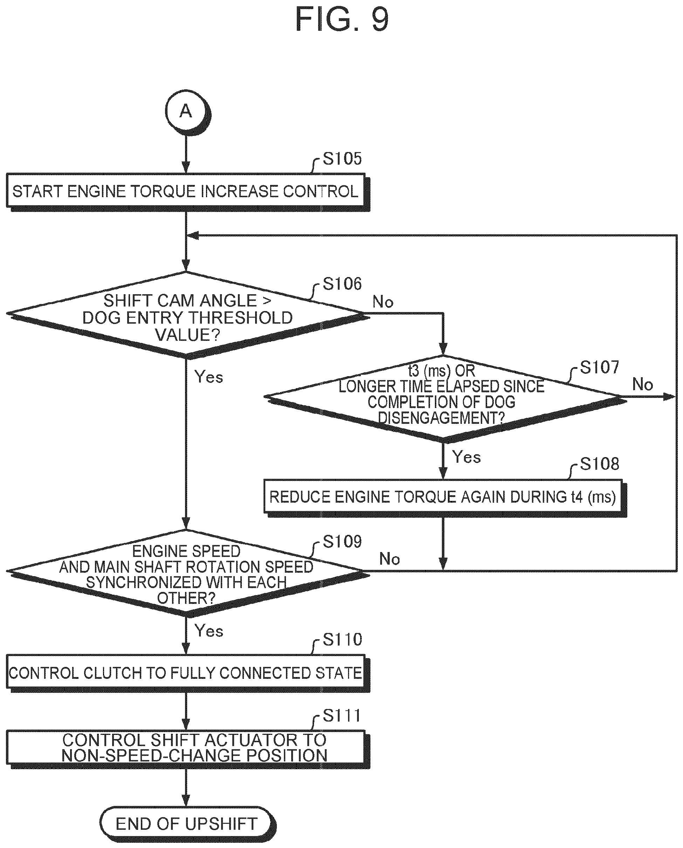

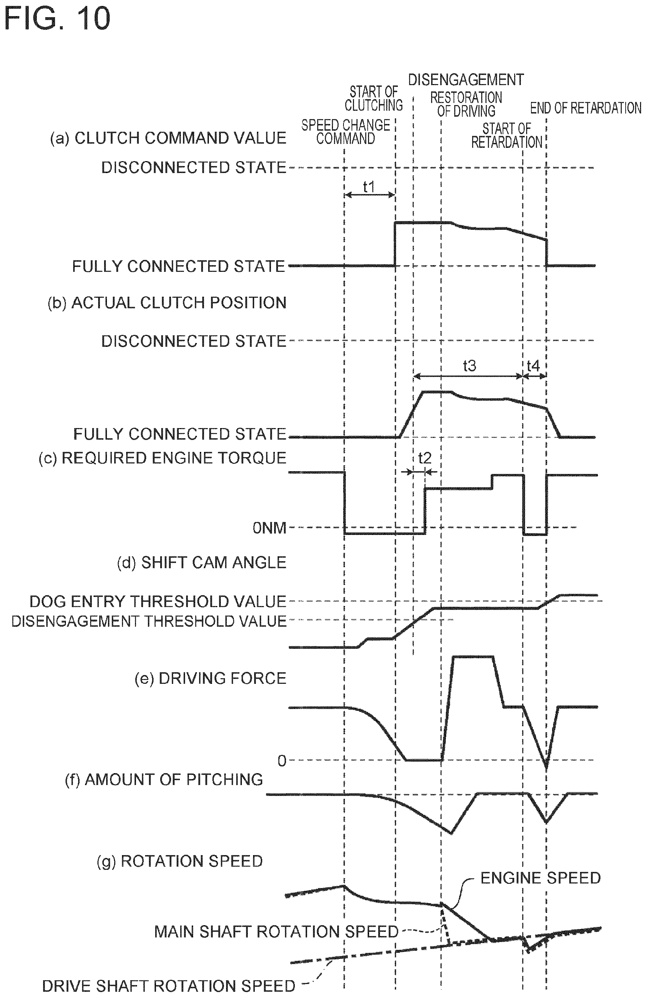

Next, a processing procedure of the control device 90 will be described. FIG. 8 and FIG. 9 are flowcharts showing procedures of the control device 90 when a speed change command is generated. As shown in FIG. 8, when a speed change command for an upshift is generated, the control device 90 of the dog clutch-type speed change device 50 controls the motive power source-torque adjustment device 80 so as to reduce the engine torque (step S101). Then, after a predetermined time t1 (ms) (see FIG. 10 (a)) since the control that reduces the engine torque has been started, the control device 90 starts controlling the clutch actuator 60 so as to put the clutch 44 in the partially connected state (step S102).

Then, the control device 90 starts upshift control by the shift actuator 70 (step S103). Thereafter, the control device 90 determines whether a shift cam angle is larger than a dog disengagement threshold value and that moreover a time t2 (ms) (see FIG. 10 (c)) has elapsed since the shift cam angle has exceeded the dog disengagement threshold value (step S104). When the time t2 (ms) has not elapsed since the shift cam angle has exceeded the dog disengagement threshold value (step S104: No), the process moves to step S104. On the other hand, when the time t2 (ms) has elapsed since the shift cam angle has exceeded the dog disengagement threshold value (step S104: Yes), the control device 90 starts control that increases the engine torque by the motive power source-torque adjustment device 80 (step S105). Here, dog disengagement may be interpreted as a state where the engaging protrusions of the driving dog have come out of the engaging recesses of the driven dog. Dog disengagement is determined to have completed when the shift cam angle has exceeded the dog disengagement threshold value.

Thereafter, the control device 90 determines whether the shift cam angle is larger than a dog entry threshold value (step S106). When the shift cam angle is not larger than the dog entry threshold value (step S106: No), the control device 90 determines whether a time t3 (ms) (see FIG. 10 (c)) or a longer time has elapsed since disengagement of the dogs has been completed (step S107). When the time t3 (ms) or a longer time has not elapsed since disengagement of the dogs has been completed (step S107: No), the process moves to step S106. When the time t3 (ms) or a longer time has elapsed since disengagement of the dogs has been completed (step S107: Yes), the control device 90 performs control that reduces the engine torque again by the motive power source-torque adjustment device 80 during a time t4 (ms) (see FIG. 10 (c)) (step S108). Thereafter, the process moves to step S106. Here, the start of dog engagement may be interpreted as a state or a timing where or when, after disengagement of the dogs, the engaging protrusions of the driving dog start entering the engaging recesses of the driven dog (a state or a timing where or when the dogs start overlapping each other). According to this embodiment, when the shift cam angle does not exceed the dog entry threshold value within a predetermined time after disengagement of the dogs is completed, it is determined that partial engagement of the dogs has occurred in the course of engagement of the driving dog and the driven dog.

On the other hand, when the shift cam angle is larger than the dog entry threshold value (step S106: Yes), the control device 90 determines whether an engine speed and a main shaft rotation speed are synchronized with each other (see FIG. 10 (g)). When the engine speed and the main shaft rotation speed are not synchronized with each other (step S109: No), the process moves to step S106. On the other hand, when the engine speed and the main shaft rotation speed are synchronized with each other (step S109: Yes), the control device 90 controls the clutch 44 to the fully connected state (step S110). Then, the control device 90 controls the shift actuator 70 to a non-speed-change position (step S111). Thereafter, the control device 90 ends the series of control.

Next, a time chart of operation of each part of the dog clutch-type speed change device 50 will be described. FIG. 10 is a view showing transitions of a clutch command value, an actual clutch position, a required engine torque, the shift cam angle, the driving force for the rear wheel 23, an amount of pitching, the speed of the engine 45, the rotation speed of the main shaft 41, and a rotation speed of the drive shaft 42 when a speed change command is generated. Here, the amount of pitching refers to an amount of shift in a motion of making a circle back and forth around a lateral rotational axis of a motorcycle. Specifically, when hard braking is applied to the front wheel 12 by operating a front brake lever 4c while the motorcycle 1 is traveling, the front fork 10 sinks and the vehicle assumes a nose-down posture. Conversely, when the throttle is turned sharply during acceleration, the front fork 10 extends and the vehicle assumes a nose-up posture. Shifts in these cases are called pitching, and an amount of shift of pitching is called an amount of pitching.

As shown in FIG. 10, when a speed change command is generated, the dog clutch-type speed change device 50 maintains the clutch 44 in the fully connected state. In addition, the dog clutch-type speed change device 50 starts reducing the torque of the engine 45. Specifically, when a speed change command is generated, the command value for the clutch 44 does not immediately switch from the fully connected state to the partially connected state. When a speed change command is generated, the control device 90 changes to control that starts reducing the required engine torque (the torque of the engine 45) to 0 Nm or a value close to 0 Nm. Thus, the driving force for the rear wheel 23 becomes gradually lower. The amount of amplitude of pitching increases gradually.

Thereafter, when the predetermined time (t1 (ms)) elapses, the command value for the clutch 44 switches from the fully connected state to the partially connected state (start of clutching). Thus, the pressure plate 451 is pushed in the rightward direction in FIG. 3 with respect to the axial direction of the main shaft 41. Then, the actual clutch position moves gradually from the fully connected state to the partially connected state. In the shift mechanism 43, switching of the speed change gears is performed. Specifically, dog disengagement of the first gear 49a from the second gear 49b and engagement thereof with another second gear 49b are performed. FIG. 10 (d) shows an aspect of occurrence of a dog half-meshing state where a situation continues where the shift cam angle does not exceed the dog entry threshold value after it exceeds the dog disengagement threshold value and disengagement of the dogs is completed.

Then, after the time t2 (ms) since the dog disengagement has been completed, the dog clutch-type speed change device 50 increases the reduced torque of the engine 45. Thereafter, when the time t3 (ms) has elapsed since the disengagement of the dogs without the shift cam angle exceeding the dog entry threshold value, the dog clutch-type speed change device 50 reduces the torque of the engine 45 by retardation. Specifically, after the predetermined time (t3 (ms)) has elapsed since the torque of the engine 45 has been increased or the dogs have been disengaged, the dog clutch-type speed change device 50 reduces the torque of the engine 45 again by starting retardation again. Here, the reduced torque of the engine 45 is increased after the disengagement of the dogs is completed. Therefore, the clutch 44 is not in the disconnected state but in the partially connected state, so that the driving force for the rear wheel 23 becomes higher. Accordingly, even when the amount of amplitude of pitching increases temporarily, the amount of amplitude of pitching decreases immediately. After the predetermined time (t3 (ms)) has elapsed since the torque of the engine 45 has been increased or since the disengagement, the dog clutch-type speed change device 50 reduces the torque of the engine 45 again by starting retardation again. Thus, the adhesive force (load) between the engaging protrusions 49c of the first gear 49a and the engaging recesses 49e of the second gear 49b is removed. Accordingly, the engaging protrusions 49c of the first gear 49a can be made to enter deep inside the engaging recesses 49e of the second gear 49b. When the torque of the engine 45 is reduced again, partial engagement of the driving dog and the driven dog can be eliminated. However, as the torque of the engine 45 is reduced, the driving force for the rear wheel 23 becomes lower and the amount of amplitude of pitching increases.

When the predetermined time (t4 (ms)) has elapsed since the torque of the engine 45 has been reduced again, the control device 90 ends the retardation and increases the torque of the engine 45. Specifically, when engagement is completed after the torque of the engine 45 is reduced again, the control device 90 ends the retardation and increases the torque of the engine 45. Thus, the amount of amplitude of pitching can be restricted so as not to increase, and a driving-absent time can be shortened. The amount of increase in the required engine torque is not limited to the example shown in FIG. 10. In situations such as the engine speed being in a high-speed state, a low-gear state, and traveling on a bad road, a relative speed between the driving dog and the driven dog tends to become high. Consequently, in these situations, a state where the driving dog and the driven dog are likely to partially engage arises.

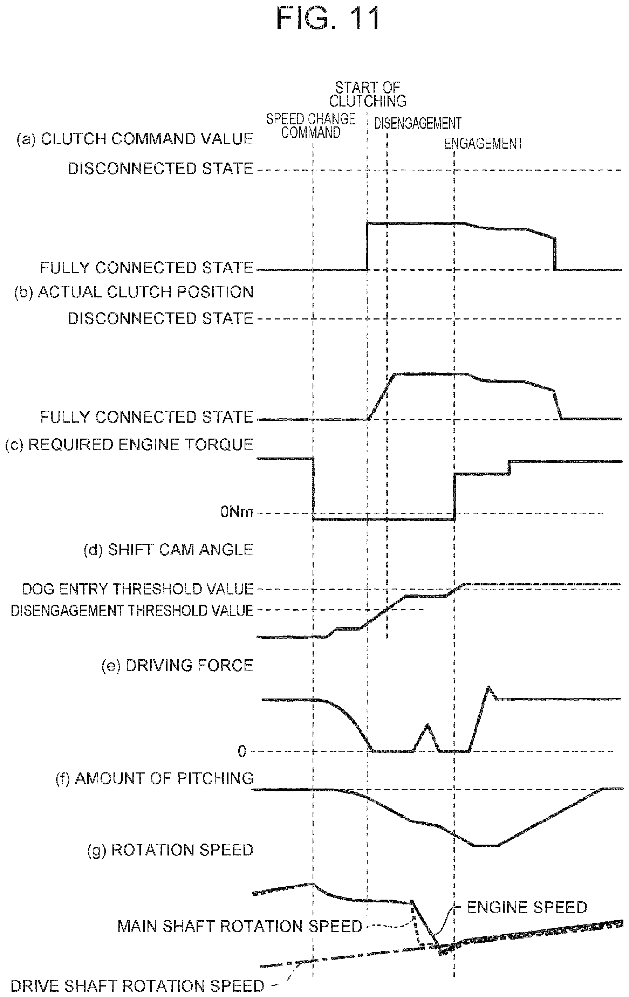

FIG. 11 is a view showing the clutch command value, the actual clutch position, the required engine torque, the shift cam angle, the driving force for the rear wheel 23, the speed of the engine 45, the rotation speed of the main shaft 41, and the rotation speed of the drive shaft 42 when a speed change command is generated in the related art. In the related art, the torque of the engine 45 is not reduced again after a predetermined time has elapsed since the reduced torque of the engine 45 has been increased after disengagement of the dogs has been completed, to thereby eliminate partial engagement of the dogs (half-meshing of the dogs) while the dogs are engaging. In the related art, control that does not increase the torque of the engine 45 until dog engagement is performed is executed.

As shown in FIG. 11, also in the related art, when a speed change is performed, the dog clutch-type speed change device 50 maintains the clutch 44 in the fully connected state. Further, the dog clutch-type speed change device 50 starts reducing the torque of the engine 45 when a speed change command is generated. Specifically, when a speed change command is generated, the control device 90 starts reducing the required engine torque (the torque of the engine 45) to 0 Nm or a value close to 0 Nm. Thus, the driving force for the rear wheel 23 becomes gradually lower. The amount of amplitude of pitching increases gradually. Thereafter, in the related art, unlike the speed change control of the embodiment, the reduced torque of the engine 45 is not increased when disengagement of the dogs is performed. In this case, the torque of the engine 45 has been reduced when a state of partial engagement (a state of half-meshing) of the dogs arises. Thus, the adhesive force (load) between the engaging protrusions 49c of the first gear 49a and the engaging recesses 49e of the second gear 49b is removed. As a result, the engaging protrusions 49c of the first gear 49a enter deep inside the engaging recesses 49e of the second gear 49b. Then, after a while, the engagement is completed. Then, after the dog engagement is completed, the reduced torque of the engine 45 is increased. However, in this control method, the torque of the engine 45 remains reduced until the dog engagement is completed. Therefore, the driving force for the rear wheel 23 remains low and a period in which the amount of amplitude of pitching is large becomes prolonged.

The dog clutch-type speed change device 50 of this embodiment configured as has been described above includes the clutch 44, the clutch actuator 60, the transmission 48, the shift actuator 70, the motive power source-torque adjustment device 80, and the control device 90. In the fully connected state, the clutch 44 transmits the torque without slippage from the engine 45 (motive power source) to the main shaft 41 as the clutch friction members are pressed. In the partially connected state, the clutch 44 transmits the torque as the clutch friction members are pressed with a pressing force that is lower than the pressing force in the fully connected state. In the disconnected state, the clutch 44 interrupts the torque transmission from the engine 45 to the main shaft 41. The clutch actuator 60 controls the clutch 44. In the transmission 48, a speed change is performed by switching the gears (the second gear 49b relative to the first gear 49a). The gears transmit the driving force between the main shaft 41 and the drive shaft 42 as the engaging protrusions 49c (driving dog) and the engaging recesses 49e (driven dog) are caused to be closer to and to be apart from each other so as to engage and disengage the engaging protrusions 49c and the engaging recesses 49e. The shift actuator 70 performs a speed change of the transmission 48. When a speed change is performed, the motive power source-torque adjustment device 80 adjusts the torque of the engine 45. The control device 90 controls the clutch actuator 60, the shift actuator 70, and the motive power source-torque adjustment device 80. The control device 90 controls the motive power source-torque adjustment device 80 so as to reduce the torque of the engine 45 when disengaging the dogs. The control device 90 increases the reduced torque of the engine 45 after disengagement of the dogs is completed. After a time interval (the time t2 in FIG. 10 (c)) has elapsed since disengagement of the dogs has been completed, the control device 90 reduces the engine torque again. Specifically, the control device 90 reduces the torque of the engine 45 again when the driving dog and the driven dog are in a state of being likely to partially engage or when partial engagement of the driving dog and the driven dog occurs, during the period in which the engine 45 is outputting an increased torque and while the clutch 44 is in the fully connected state or the partially connected state, such that when partial engagement of the driving dog and the driven dog occurs during the period in which the engine 45 is outputting the increased torque, this partial engagement is dissolved. Thus, the control device 90 controls the motive power source-torque adjustment device 80 based on the state of engagement of the driving dog and the driven dog. By such control, the time from when the driving force for the rear wheel 23 decreases until it increases becomes shorter. The time from when the amount of amplitude of pitching increases until it decreases also becomes shorter. The torque of the engine 45 is reduced again so as to eliminate partial engagement of the dogs while the dogs are engaging. Therefore, after the disengagement, the state of partial engagement of the driving dog and the driven dog can be prevented from continuing.

In the dog clutch-type speed change device 50 of this embodiment, during the period in which the engine 45 is outputting an increased torque and while the clutch 44 is in the fully connected state or the partially connected state, the control device 90 may control the motive power source-torque adjustment device 90 when the state is such that partial engagement of the driving dog and the driven dog is likely to occur or when partial engagement of the driving dog and the driven dog occurs, while the increased engine torque is retained after disengagement of the dogs has been completed. The control device 90 may reduce the torque of the engine 45 again. By reducing the torque of the engine 45 again, partial engagement of the driving dog and the driven dog can be dissolved.

The dog clutch-type speed change device 50 of this embodiment may further include a dog position detection device. The dog position detection device detects position information on at least one of the driving dog, the driven dog, and a mechanism that causes the driving dog and the driven dog to be apart from or to be closer to each other. The dog clutch-type speed change device 50 may control the motive power source-torque adjustment device 80 based on the state of engagement of the driving dog and the driven dog according to the position information on the dogs detected by the dog position detection device. Specifically, the dog clutch-type speed change device 50 may calculate the positions of the driving dog and the driven dog from an amount of rotation of the shift cam 421 or an amount of movement of the shift fork 422. The dog clutch-type speed change device 50 may infer the state of engagement of the driving dog and the driven dog based on this position information. The dog clutch-type speed change device 50 may adjust the motive power source-torque adjustment device 80 based on this state of engagement and control the engine torque.

Here, as a state where partial engagement of the driving dog and the driven dog is likely to occur, a state where the relative speed between the dogs is high is conceivable. Specifically, states where partial engagement of the driving dog and the driven dog is likely to occur include a state where the engine speed is high, a state where the transmission is in a low-gear state, and a state where the motorcycle is traveling on a bad road. The control unit 90 grasps the state of engagement of the driving dog and the driven dog. The control unit 90 controls the motive power source-torque adjustment device 80 and reduces the torque of the engine 45 according to this state of engagement. Thus, the dog clutch-type speed change device 50 can eliminate partial engagement.

In the dog clutch-type speed change device 50 of this embodiment, the increased engine torque may be reduced again after the increased state of the engine torque is maintained for a predetermined time with the clutch 44 in the fully connected or partially connected state, such that when partial engagement of the driving dog and the driven dog occurs during the period in which the increased engine torque is continuously output after disengagement of the dogs is completed, this partial engagement is dissolved. Thus, the control device 90 may control the motive power source-torque adjustment device 80 based on the state of engagement of the driving dog and the driven dog. The control device 90 may eliminate the state of partial engagement of the driving dog and the driven dog. Thus, the amount of amplitude of pitching can be restricted so as not to increase, and partial engagement of the driving dog and the driven dog can be eliminated.

In the dog clutch-type speed change device 50 of this embodiment, the transmission 48 may include the shift fork 422 and the shift cam 421. The shift fork 422 causes the driving dog and the driven dog to be apart from or to be closer to each other. The shift cam 421 is controlled by a shift pedal or the control device 90. The shift pedal is operated by the rider. The shift cam 421 is driven by the shift actuator 70 and moves the shift fork 422. The control device 90 may control the motive power source-torque adjustment device 80 based on the state of engagement of the driving dog and the driven dog according to position information on at least one of the driving dog, the driven dog, the shift cam 421, the shift fork 422, the shift pedal, and the shift actuator 70.

Specifically, the control device 90 may infer the state of engagement of the driving dog and the driven dog using, as position information, at least one of position information on the driving dog or the driven dog, information on rotation of the shift cam 421, position information on the shift fork, information on rotation of the shift cam 421 resulting from operation of the shift pedal, and information on operation of the shift actuator 70. The control device 90 may control the motive power source-torque adjustment device 80 based on the inferred state of engagement of the driving dog and the driven dog.

The dog clutch-type speed change device 50 of this embodiment may include a clutch connection state detection device that detects information relating to the connection state of the clutch 44. The control device 90 may control the motive power source-torque adjustment device 80 based on information on the connection state of the clutch 44 and the state of engagement of the driving dog and the driven dog. The information on the connection state of the clutch 44 is detected by the clutch connection state detection device. Specifically, the control device 90 acquires, from the clutch connection state detection device, information that the state of the clutch 44 is one of the fully connected state, the partially connected state, and the disconnected state. The control device 90 controls the motive power source-torque adjustment device 80 based on the state of the clutch 44 and information that the driving dog and the driven dog are in one of the disengaged state, the partially engaged state, and the engaged state. The control device 90 controls the torque of the engine 45. As a sensor for detecting the clutch connection state, a rotary or linear potentiometer or position switch can also be used. A sensor that detects slippage of the clutch may detect the clutch connection state. The clutch connection state may be detected by detecting a difference in the number of rotations by a clutch driving-side rotation sensor, a crankshaft sensor, a main shaft sensor that is a clutch driven-side rotation sensor, a drive shaft sensor, a rear-wheel shaft sensor, etc.

Next, a clutch interlocking mechanism that switches the state of the clutch 44 and the speed change gears of the transmission 48 will be described. FIG. 12 is a sectional view showing the internal configuration of a power unit 30 including a clutch interlocking mechanism 46. Portions that are the same as in the power unit 20 will be denoted by the same reference signs and detailed description thereof will be omitted.

As shown in FIG. 12, the clutch interlocking mechanism 46 has a ball cam 468 and a seesaw structure 469. The ball cam 468 converts a rotation amount of rotation for switching the gears of the transmission 48 into an amount of linear movement. The seesaw structure 469 transmits the amount of linear movement from the ball cam 468 to the clutch 44. Thus, when a speed change command is generated, the gears are switched from the shift actuator 70 to the transmission 48. Further, the clutch 44 can be controlled.

The dog clutch-type speed change device 50 of this embodiment may include a clutch interlocking mechanism that changes the state of the clutch 44. The clutch interlocking mechanism is driven by a clutch lever or the clutch actuator 60. The clutch lever is operated by the rider. The clutch actuator 60 is an electric type or a fluid-pressure type. The clutch actuator 60 is controlled by the control device 90. The control device 90 may infer the state of the clutch 44 according to position information on at least one of the clutch lever, the clutch actuator 60, and the clutch interlocking mechanism, and to a fluid pressure. The control device 90 may control the motive power source-torque adjustment device 80 based on that inferred state of the clutch 44. For example, the control device 90 acquires, as position information, at least one of an amount of operation of the clutch, an amount of control input into the clutch actuator 60, and an amount of operation of the clutch interlocking mechanism. The amount of operation of the clutch is inferred from a gripped angle of the clutch lever operated by the rider. The clutch interlocking mechanism changes the state of the clutch 44 based on information on operation of the shift actuator 70. Or the control device 90 acquires a fluid pressure of the clutch actuator 60 that changes the state of the clutch. Based on that position information or fluid pressure, the control device 90 infers the state of the clutch 44 as at least one state among the fully connected state, the partially connected state, and the disconnected state. Based on that inferred state of the clutch 44, the control device 90 performs control of the motive power source-torque adjustment device 80.

To shorten the driving-absent time, the dog clutch-type speed change device 50 including the clutch interlocking mechanism 46 may engage the clutch 44 early after the driving dog and the driven dog are disengaged. When such control that puts the clutch 44 in the fully connected state or the partially connected state is executed before the driving dog and the driven dog are disengaged or engagement of the driving dog and the driven dog is completed, the state of partial engagement of the driving dog and the driven dog may arise. However, according to the dog clutch-type speed change device 50 of this embodiment, the torque of the engine 45 is reduced again during the period in which the engine 45 is outputting the increased torque and while the clutch 44 is in the fully connected state or the partially connected state, such that when partial engagement of the driving dog and the driven dog occurs during the period in which the engine 45 is outputting the increased torque, this partial engagement is dissolved. Thus, the motive power source-torque adjustment device 80 is controlled based on the state of engagement of the driving dog and the driven dog. Thereby partial engagement of the driving dog and the driven dog can be dissolved.

In the dog clutch-type speed change device 50 of this embodiment, the torque of the engine 45 is reduced to perform dog disengagement, and the reduced torque of the engine 45 is increased after the disengagement is completed, and the torque of the engine 45 is reduced again when the amount of pitching has decreased to a state close to that before the speed change. Partial engagement of the dogs occurring in the course of dog engagement may be thereby eliminated. In this case, the torque of the engine 45 is reduced again when the amount of pitching has decreased to a state close to that before the speed change. Therefore, even when partial engagement of the dogs occurs, a period in which the amount of amplitude of pitching is large is divided into two times. Thus, the period in which the amount of amplitude of pitching becomes large in each time becomes shorter. Consequently, the amount of amplitude of pitching can be restricted so as not to increase. Further, even when the control unit 90 increases the torque of the engine after dog disengagement by controlling the motive power source-torque adjustment device 80 and then reduces that increased engine torque again to eliminate partial engagement of the dogs, the engine torque may be increased again when partial engagement of the dogs is eliminated. According to this aspect of control, the driving-absent time can be shortened.

In the speed change control device 50 of this embodiment, when engagement of the driving dog and the driven dog is not completed after a time interval since disengagement of the driving dog and the driven dog or after a predetermined time has elapsed since disengagement of the driving dog and the driven dog, the control device may control the motive power source-torque adjustment device so as to reduce the torque of the engine 45. In the speed change control device 50 of this embodiment, when engagement of the driving dog and the driven dog is not completed after a predetermined time has elapsed since the torque of the engine 45 has been increased or after a time interval since the torque of the engine 45 has been increased, the control device may control the motive power source-torque adjustment device so as to reduce the torque of the engine 45. In the speed change control device 50 of this embodiment, when the amount of amplitude of pitching has recovered to a state close to that before the speed change after the engine 45 has been increased, the torque of the engine 45 may be reduced again so as to eliminate partial engagement of the driving dog and the driven dog.

The dog clutch-type speed change device 50 according to this embodiment is not limited to the above-described aspects and various changes can be made thereto.

In the above-described dog clutch-type speed change device 50, the case where the driving dog moves has been described. However, in a dog clutch-type speed change device 50 of a modified example, disengagement may be performed between a first driving dog and a first driven dog, and a second driving dog and a second driving dog separate from the first driving dog and the first driven dog may be engaged. Instead of the structure in which the driving dog moves, a structure in which the driven dog moves may be adopted.

### Reference Signs List

- 1: Motorcycle
- 3: Head pipe
- 4: Steering handlebar
- 5: Rear arm bracket
- 6: Vehicle body frame
- 6a: Frame part
- 10: Front fork
- 12: Front wheel
- 13: Fuel tank
- 14: Seat
- 20: Power unit
- 21: Rear arm
- 22: Pivot shaft
- 23: Rear wheel
- 25: Crankshaft
- 26: Crank case
- 38: Potentiometer
- 39: Potentiometer
- 41: Main shaft
- 42: Drive shaft
- 43: Shift mechanism
- 44: Clutch
- 45: Motive power source, engine
- 46: Clutch interlocking mechanism
- 47: Power transmission mechanism
- 48: Transmission
- 49: Speed change gear
- 49a: First gear
- 49b: Second gear
- 49c: Engaging protrusion
- 49d: Groove
- 49e: Engaging recess
- 49f: Axial end surface
- 49g: Insertion hole
- 49h: Insertion hole
- 50: Dog clutch-type speed change device
- 60: Clutch actuator
- 61: Intake pipe
- 62: Exhaust pipe
- 63: Accelerator
- 65: Throttle valve
- 66: Fuel supply device
- 67: Ignition device
- 70: Shift actuator
- 71: Control selection switch
- 72: Shift switch
- 72a: Upshift switch
- 72b: Downshift switch
- 73: Power source device
- 74: Main switch
- 75: Shift rod
- 80: Motive power source-torque adjustment device
- 90: Control device
- 91: Switching determination unit
- 92: Driving state detection unit
- 93: Semi-automatic control unit
- 94: Fully automatic control unit
- 310: Gear
- 420: Speed change gear
- 421: Shift cam
- 421a: Cam groove
- 422: Shift fork
- 441: Gear
- 442: Plate group
- 443: Clutch housing
- 445: Friction plate
- 447: Clutch boss
- 449: Clutch plate
- 450: Spring
- 451: Pressure plate
- 451B: Pressing part
- 455: Push rod
- 457: Bearing
- 459: Ball
- 461: Push rod
- 461A: One end portion
- 463: Piston
- 465: Cylinder main body
- 467: Space
- 468: Ball cam
- 469: Seesaw structure

## Claims

1. A dog clutch-type speed change device (50) comprising:
a clutch (44) that is configured to, in a fully connected state, transmit a torque from a motive power source (45) to a main shaft as a clutch friction member is pressed, in a partially connected state, transmit the torque as the clutch friction member is pressed with a pressing force lower than a pressing force in the fully connected state, and in a disconnected state, interrupt the torque transmission from the motive power source (45) to the main shaft (41);
a transmission (48) that is configured to disengage a driving dog and a driven dog by causing the driving dog and the driven dog to be apart from each other and engage the driving dog and the driven dog by causing the driving dog and the driven dog to be closer to each other, and thus switch gears that are configured to transmit the torque between the main shaft (41) and a drive shaft (42);
a motive power source-torque adjustment device (80) that is configured to adjust the torque of the motive power source (45); and
a control device (90) that is configured to control the motive power source-torque adjustment device (80) during a speed change, **characterized in that**
the control device (90) is configured to control the motive power source-torque adjustment device (80) based on a state of engagement of the driving dog and the driven dog by: (1) reducing the torque of the motive power source (45) with the clutch (44) in the fully connected state or the partially connected state and the driving dog and the driven dog in an engaged state such that disengagement of the driving dog and the driven dog is promoted; (2) increasing the torque of the motive power source (45) that has decreased from when the driving dog and the driven dog have been disengaged until when the driving dog and the driven dog have started engaging and while the clutch (44) has been in the fully connected state or the partially connected state, such that the torque transmission between the motive power source (45) and the drive shaft (42) is performed when the disengaged driving dog and driven dog are engaged later; and (3) reducing the torque of the motive power source (45) again during a period in which the motive power source (45) is outputting an increased torque and while the clutch (44) is in the fully connected state or the partially connected state, such that when partial engagement of the driving dog and the driven dog occurs during the period in which the motive power source (45) is outputting the increased torque, this partial engagement is dissolved.

2. The dog clutch-type speed change device (50) according to claim 1, wherein the control device (50) is configured to control the motive power source-torque adjustment device (80) based on the state of engagement of the driving dog and the driven dog by (3) reducing the torque of the motive power source (45) again when the driving dog and the driven dog are in a state of being likely to partially engage or when partial engagement of the driving dog and the driven dog occurs, during the period in which the motive power source (45) is outputting the increased torque and while the clutch (44) is in the fully connected state or the partially connected state, such that when partial engagement of the driving dog and the driven dog occurs during the period in which the motive power source (45) is outputting the increased torque, this partial engagement is dissolved.

3. The dog clutch-type speed change device (50) according to any one of claims 1 and 2, comprising a dog position detection device that is configured to detect position information on at least one of the driving dog, the driven dog, and a mechanism that is configured to cause the driving dog and the driven dog to be apart from or to be closer to each other, wherein the control device (90) is configured to control the motive power source-torque adjustment device (80) based on the state of engagement of the driving dog and the driven dog according to the position information detected by the dog position detection device.

4. The dog clutch-type speed change device (50) according to any one of claims 1 to 3, wherein the control device (90) is configured to control the motive power source-torque adjustment device (80) based on the state of engagement of the driving dog and the driven dog by (3) reducing the increased torque of the motive power source (45) again after retaining a torque-increased state of the motive power source (50) with the clutch (44) in the fully connected state or the partially connected state, such that when partial engagement of the driving dog and the driven dog occurs during the period in which the motive power source (45) is outputting the increased torque, this partial engagement is dissolved.

5. The dog clutch-type speed change device (50) according to any one of claims 1 to 4, wherein:
the transmission (48) includes a shift fork (422) that is configured to move the driving dog and the driven dog away from or toward each other, and a shift drum (421) that is configured to be driven by a shift actuator (70) and to move the shift fork (422), the shift actuator (70) being controlled by the control device (90) or a shift pedal that is operated by a rider; and
the control device (90) is configured to control the motive power source-torque adjustment device (80) based on the state of engagement of the driving dog and the driven dog according to position information on at least one of the driving dog, the driven dog, the shift fork (422), the shift drum (421), the shift pedal, and the shift actuator (70).

6. The dog clutch-type speed change device (50) according to any one of claims 1 to 5, comprising a clutch connection state detection device that is configured to detect information relating to a connection state of the clutch (44), wherein the control device (90) is configured to control the motive power source-torque adjustment device (80) based on the state of engagement of the driving dog and the driven dog according to the information on the connection state of the clutch (44) detected by the clutch connection state detection device.

7. The dog clutch-type speed change device (50) according to any one of claims 1 to 6, comprising a clutch interlocking mechanism (46) that is configured to be driven by a clutch lever or an electric or fluid-pressure clutch actuator (60) and to change the state of the clutch (44), the clutch lever being operated by a rider, the clutch actuator (60) being configured to be controlled by the control device (90), wherein the control device (90) is configured to control the motive power source-torque adjustment device (80) based on the state of the clutch (44) according to position information on at least one of the clutch lever, the clutch actuator (60), and the clutch interlocking mechanism (46) and to a fluid pressure.

## Patentansprüche

1. Eine Gangwechselvorrichtung vom Klauenkupplungstyp (50), die folgende Merkmale aufweist:
eine Kupplung (44), die dazu konfiguriert ist, in einem vollständig verbundenen Zustand ein Drehmoment von einer Bewegungsleistungsquelle (45) an eine Hauptwelle zu übertragen, während ein Kupplungsreibungsbauglied gedrückt wird, in einem teilweise verbundenen Zustand das Drehmoment zu übertragen, während das Kupplungsreibungsbauglied mit einer Druckkraft gedrückt wird, die niedriger als eine Druckkraft in dem vollständig verbundenen Zustand ist, und in einem getrennten Zustand die Drehmomentübertragung von der Bewegungsleistungsquelle (45) an die Hauptwelle (41) zu unterbrechen;
ein Getriebe (48), das dazu konfiguriert ist, eine Antriebsklaue und eine angetriebene Klaue zu lösen, indem bewirkt wird, dass die Antriebsklaue und die angetriebene Klaue voneinander entfernt sind, und die Antriebsklaue und die angetriebene Klaue miteinander in Eingriff zu bringen, indem bewirkt wird, dass die Antriebsklaue und die angetriebene Klaue einander näher sind, und somit Getrieberäder zu wechseln, die dazu konfiguriert sind, das Drehmoment zwischen der Hauptwelle (41) und einer Antriebswelle (42) zu übertragen;
eine Bewegungsleistungsquellen-Drehmomenteinstellungsvorrichtung (80), die dazu konfiguriert ist, das Drehmoment der Bewegungsleistungsquelle (45) einzustellen; und
eine Steuervorrichtung (90), die dazu konfiguriert ist, die Bewegungsleistungsquellen-Drehmomenteinstellungsvorrichtung (80) während eines Gangwechsels zu steuern, **dadurch gekennzeichnet, dass**
die Steuervorrichtung (90) ist dazu konfiguriert, die Bewegungsleistungsquellen-Drehmomenteinstellungsvorrichtung (80) basierend auf einem Eingriffszustand der Antriebsklaue und der angetriebenen Klaue zu steuern, durch: (1) Reduzieren des Drehmoments der Bewegungsleistungsquelle (45) mit der Kupplung (44) in dem vollständig verbundenen Zustand oder dem teilweise verbundenen Zustand und der Antriebsklaue und der angetriebenen Klaue in einem eingegriffenen Zustand derart, dass eine Lösung der Antriebsklaue und der angetriebenen Klaue vorangetrieben wird; (2) Erhöhen des Drehmoments der Bewegungsleistungsquelle (45), das verringert wurde, ab dem Zeitpunkt, zu dem die Antriebsklaue und die angetriebene Klaue gelöst wurde, bis zu dem Zeitpunkt, zu dem damit begonnen wurde, die Antriebsklaue und die angetriebene Klaue miteinander in Eingriff zu bringen, und während die Kupplung (44) in dem vollständig verbundenen Zustand oder dem teilweise verbundenen Zustand war, derart, dass die Drehmomentübertragung zwischen der Bewegungsleistungsquelle (45) und der Antriebswelle (42) durchgeführt wird, wenn die gelöste Antriebsklaue und angetriebene Klaue zu einem späteren Zeitpunkt in Eingriff gebracht werden; und (3) erneutes Reduzieren des Drehmoments der Bewegungsleistungsquelle (45) während eines Zeitraums, in dem die Bewegungsleistungsquelle (45) ein erhöhtes Drehmoment ausgibt und während die Kupplung (44) in dem vollständig verbundenen Zustand oder dem teilweise verbundenen Zustand ist, derart, dass dann, wenn ein teilweiser Eingriff der Antriebsklaue und der angetriebenen Klaue während des Zeitraums erfolgt, in dem die Bewegungsleistungsquelle (45) das erhöhte Drehmoment ausgibt, dieser teilweise Eingriff aufgelöst wird.

2. Die Gangwechselvorrichtung vom Klauenkupplungstyp (50) gemäß Anspruch 1, wobei die Steuervorrichtung (50) dazu konfiguriert ist, die Bewegungsleistungsquellen-Drehmomenteinstellungsvorrichtung (80) basierend auf dem Eingriffszustand der Antriebsklaue und der angetriebenen Klaue zu steuern, durch (3) erneutes Reduzieren des Drehmoments der Bewegungsleistungsquelle (45), wenn die Antriebsklaue und die angetriebene Klaue in einem Zustand sind, in dem es wahrscheinlich ist, dass dieselben teilweise miteinander in Eingriff treten oder wenn ein teilweiser Eingriff der Antriebsklaue und der angetriebenen Klaue erfolgt, während des Zeitraums in dem die Bewegungsleistungsquelle (45) das erhöhte Drehmoment ausgibt und während die Kupplung (44) in dem vollständig verbundenen Zustand oder dem teilweise verbundenen Zustand ist, derart, dass dann, wenn ein teilweiser Eingriff der Antriebsklaue und der angetriebenen Klaue während des Zeitraums erfolgt, in dem die Bewegungsleistungsquelle (45) das erhöhte Drehmoment erzeugt, dieser teilweise Eingriff aufgelöst wird.

3. Die Gangwechselvorrichtung vom Klauenkupplungstyp (50) gemäß einem der Ansprüche 1 und 2, die eine Klauenpositionsdetektionsvorrichtung aufweist, die dazu konfiguriert ist, Positionsinformationen über die Antriebsklaue, die angetriebene Klaue und/oder einen Mechanismus zu detektieren, der dazu konfiguriert ist, zu bewirken, dass die Antriebsklaue und die angetriebene Klaue voneinander entfernt sind oder einander näher sind, wobei die Steuervorrichtung (90) dazu konfiguriert ist, die Bewegungsleistungsquellen-Drehmomenteinstellungsvorrichtung (80) basierend auf dem Eingriffszustand der Antriebsklaue und der angetriebenen Klaue gemäß den Positionsinformationen, die von der Klauenpositionsdetektionsvorrichtung detektiert werden, zu steuern.

4. Die Gangwechselvorrichtung vom Klauenkupplungstyp (50) gemäß einem der Ansprüche 1 bis 3, wobei die Steuervorrichtung (90) dazu konfiguriert ist, die Bewegungsleistungsquellen-Drehmomenteinstellungsvorrichtung (80) basierend auf dem Eingriffszustand der Antriebsklaue und der angetriebenen Klaue zu steuern, durch (3) erneutes Reduzieren des erhöhten Drehmoment der Bewegungsleistungsquelle (45) nach Aufrechterhaltung eines Zustand mit erhöhtem Drehmoment der Bewegungsleistungsquelle (50) mit der Kupplung (44) in dem vollständig verbundenen Zustand oder dem teilweise verbundenen Zustand derart, dass dann, wenn ein teilweiser Eingriff der Antriebsklaue und der angetriebenen Klaue während des Zeitraums erfolgt, in dem die Bewegungsleistungsquelle (45) das erhöhte Drehmoment ausgibt, dieser teilweise Eingriff aufgelöst wird.

5. Die Gangwechselvorrichtung vom Klauenkupplungstyp (50) gemäß einem der Ansprüche 1 bis 4, wobei:
das Getriebe (48) eine Schaltgabel (422), die dazu konfiguriert ist, die Antriebsklaue und die angetriebene Klaue voneinander wegzubewegen oder zueinander hinzubewegen, und eine Schalttrommel (421) umfasst, die dazu konfiguriert ist, von einem Schaltaktor (70) angetrieben zu werden und die Schaltgabel (422) zu bewegen, wobei der Schaltaktor (70) von der Steuervorrichtung (90) oder einem Schaltpedal, das von einem Fahrer betätigt wird, gesteuert wird; und
die Steuervorrichtung (90) dazu konfiguriert ist, die Bewegungsleistungsquellen-Drehmomenteinstellungsvorrichtung (80) basierend auf dem Eingriffszustand der Antriebsklaue und der angetriebenen Klaue gemäß Positionsinformationen über die Antriebsklaue, die angetriebene Klaue, die Schaltgabel (422), die Schalttrommel (421), das Schaltpedal und/oder den Schaltaktor (70) zu steuern.

6. Die Gangwechselvorrichtung vom Klauenkupplungstyp (50) gemäß einem der Ansprüche 1 bis 5, die eine Kupplungsverbindungszustand-Detektionsvorrichtung aufweist, die dazu konfiguriert ist, Informationen bezüglich eines Verbindungszustands der Kupplung (44) zu detektieren, wobei die Steuervorrichtung (90) dazu konfiguriert ist, die Bewegungsleistungsquellen-Drehmomenteinstellungsvorrichtung (80) basierend auf dem Eingriffszustand der Antriebsklaue und der angetriebenen Klaue gemäß den Informationen über den Verbindungszustand der Kupplung (44), die von der Kupplungsverbindungszustand-Detektionsvorrichtung detektiert werden, zu steuern.

7. Die Gangwechselvorrichtung vom Klauenkupplungstyp (50) gemäß einem der Ansprüche 1 bis 6, die einen Kupplungsverriegelungsmechanismus (46) aufweist, der dazu konfiguriert ist, von einem Kupplungshebel oder einem elektrischen oder Fluiddruck-Kupplungsaktor (60) angetrieben zu werden und den Zustand der Kupplung (44) zu verändern, wobei der Kupplungshebel von einem Fahrer betätigt wird, wobei der Kupplungsaktor (60) dazu konfiguriert ist, von der Steuervorrichtung (90) gesteuert zu werden, wobei die Steuervorrichtung (90) dazu konfiguriert ist, die Bewegungsleistungsquellen-Drehmomenteinstellungsvorrichtung (80) basierend auf dem Zustand der Kupplung (44) gemäß Positionsinformationen über den Kupplungshebel, den Kupplungsaktor (60) und/oder den Mechanismus zum Verriegeln der Kupplung (46) und gemäß einem Fluiddruck zu steuern.

## Revendications

1. Dispositif de changement de vitesse à embrayage à crabots (50) comprenant :
un embrayage (44) qui est configuré pour, dans un état complètement connecté, transmettre un couple depuis une source de puissance motrice (45) vers un arbre principal lorsqu'un élément de friction d'embrayage est pressé, dans un état partiellement connecté, transmettre le couple lorsque l'élément de friction d'embrayage est pressé avec une force de pression inférieure à une force de pression à l'état complètement connecté, et dans un état déconnecté, interrompre la transmission du couple depuis la source de puissance motrice (45) vers l'arbre principal (41) ;
une transmission (48) qui est configurée pour désengager un crabot d'entraînement et un crabot entraîné en éloignant le crabot d'entraînement et le crabot entraîné l'un de l'autre et pour engager le crabot d'entraînement et le crabot entraîné en rapprochant le crabot d'entraînement et le crabot entraîné l'un de l'autre, et ainsi changer les engrenages qui sont configurés pour transmettre le couple entre l'arbre principal (41) et un arbre d'entraînement (42) ;
un dispositif de réglage du couple de la source de puissance motrice (80) qui est configuré pour régler le couple de la source de puissance motrice (45) ; et
un dispositif de commande (90) qui est configuré pour commander le dispositif de réglage du couple de la source de puissance motrice (80) pendant un changement de vitesse, **caractérisé en ce que**
le dispositif de commande (90) est configuré pour commander le dispositif de réglage du couple de la source de puissance motrice (80) sur la base d'un état d'engagement du crabot d'entraînement et du crabot entraîné en : (1) réduisant le couple de la source de puissance motrice (45) avec l'embrayage (44) dans l'état complètement connecté ou dans l'état partiellement connecté et le crabot d'entraînement et le crabot entraîné dans un état engagé de manière à favoriser le désengagement du crabot d'entraînement et du crabot entraîné ; (2) augmentant le couple de la source de puissance motrice (45) qui a diminué entre le moment où le crabot d'entraînement et le crabot entraîné ont été désengagés et le moment où le crabot d'entraînement et le crabot entraîné ont commencé à s'engager, et pendant que l'embrayage (44) était dans l'état complètement connecté ou dans l'état partiellement connecté, de manière à ce que la transmission du couple entre la source de puissance motrice (45) et l'arbre d'entraînement (42) est effectuée lorsque le crabot d'entraînement et le crabot entraîné désengagés s'engagent ultérieurement ; et (3) réduisant à nouveau le couple de la source de puissance motrice (45) pendant une période au cours de laquelle la source de puissance motrice (45) produit un couple accru et pendant que l'embrayage (44) est dans l'état complètement connecté ou dans l'état partiellement connecté, de sorte que lorsque l'engagement partiel du crabot d'entraînement et du crabot entraîné se produit pendant la période au cours de laquelle la source de puissance motrice (45) produit le couple accru, cet engagement partiel est dissous.

2. Dispositif de changement de vitesse à embrayage à crabots (50) selon la revendication 1, dans lequel le dispositif de commande (50) est configuré pour commander le dispositif de réglage du couple de la source de puissance motrice (80) sur la base de l'état d'engagement du crabot d'entraînement et du crabot entraîné en (3) réduisant à nouveau le couple de la source de puissance motrice (45) lorsque le crabot d'entraînement et le crabot entraîné sont dans un état susceptible de s'engager partiellement ou lorsque l'engagement partiel du crabot d'entraînement et du crabot entraîné se produit, pendant la période au cours de laquelle la source de puissance motrice (45) délivre le couple accru et pendant que l'embrayage (44) est à l'état complètement connecté ou à l'état partiellement connecté, de sorte que lorsque l'engagement partiel du crabot d'entraînement et du crabot entraîné se produit pendant la période au cours de laquelle la source de puissance motrice (45) délivre le couple accru, cet engagement partiel est dissous.

3. Dispositif de changement de vitesse à embrayage à crabots (50) selon l'une quelconque des revendications 1 et 2, comprenant un dispositif de détection de position de crabot qui est configuré pour détecter des informations de position sur au moins l'un du crabot d'entraînement, du crabot entraîné et un mécanisme qui est configuré pour éloigner ou rapprocher le crabot d'entraînement et le crabot entraîné l'un de l'autre, dans lequel le dispositif de commande (90) est configuré pour commander le dispositif de réglage du couple de la source de puissance motrice (80) en fonction de l'état d'engagement du crabot d'entraînement et du crabot entraîné selon les informations de position détectées par le dispositif de détection de position de crabot.

4. Dispositif de changement de vitesse à embrayage à crabots (50) selon l'une quelconque des revendications 1 à 3, dans lequel le dispositif de commande (90) est configuré pour commander le dispositif de réglage du couple de la source de puissance motrice (80) sur la base de l'état d'engagement du crabot d'entraînement et du crabot entraîné en (3) réduisant à nouveau le couple accru de la source de puissance motrice (45) après avoir maintenu un état de couple accru de la source de puissance motrice (50) avec l'embrayage (44) dans l'état complètement connecté ou dans l'état partiellement connecté, de telle sorte que lorsque l'engagement partiel du crabot d'entraînement et du crabot entraîné se produit pendant la période au cours de laquelle la source de puissance motrice (45) produit le couple accru, cet engagement partiel est dissous.

5. Dispositif de changement de vitesse à embrayage à crabots (50) selon l'une quelconque des revendications 1 à 4, dans lequel :
la transmission (48) comprend une fourchette de changement de vitesse (422) qui est configurée pour éloigner ou rapprocher le crabot d'entraînement et le crabot entraîné l'un de l'autre, et un tambour de changement de vitesse (421) qui est configuré pour être entraîné par un actionneur de changement de vitesse (70) et pour déplacer la fourchette de changement de vitesse (422), l'actionneur de changement de vitesse (70) étant commandé par le dispositif de commande (90) ou par une pédale de changement de vitesse actionnée par un conducteur ; et
le dispositif de commande (90) est configuré pour commander le dispositif de réglage du couple de la source de puissance motrice (80) sur la base de l'état d'engagement du crabot d'entraînement et du crabot entraîné selon les informations de position sur au moins l'un parmi le crabot d'entraînement, le crabot entraîné, la fourchette de changement de vitesse (422), le tambour de changement de vitesse (421), la pédale de changement de vitesse et l'actionneur de changement de vitesse (70).

6. Dispositif de changement de vitesse à embrayage à crabots (50) selon l'une quelconque des revendications 1 à 5, comprenant un dispositif de détection de l'état de connexion d'embrayage qui est configuré pour détecter des informations relatives à un état de connexion de l'embrayage (44), dans lequel le dispositif de commande (90) est configuré pour commander le dispositif de réglage du couple de la source de puissance motrice (80) sur la base de l'état d'engagement du crabot d'entraînement et du crabot entraîné en fonction des informations sur l'état de connexion de l'embrayage (44) détectées par le dispositif de détection de l'état de connexion de l'embrayage.

7. Dispositif de changement de vitesse à embrayage à crabots (50) selon l'une quelconque des revendications 1 à 6, comprenant un mécanisme de verrouillage d'embrayage (46) qui est configuré pour être entraîné par un levier d'embrayage ou un actionneur d'embrayage électrique ou à pression de fluide (60) et pour changer l'état de l'embrayage (44), le levier d'embrayage étant actionné par un conducteur, l'actionneur d'embrayage (60) étant configuré pour être commandé par le dispositif de commande (90), dans lequel le dispositif de commande (90) est configuré pour commander le dispositif de réglage du couple de la source de puissance motrice (80) sur la base de l'état de l'embrayage (44) selon les informations de position sur au moins un parmi le levier d'embrayage, l'actionneur d'embrayage (60) et le mécanisme de verrouillage d'embrayage (46) et à une pression de fluide.
